# EUROPEAN PATENT APPLICATION

(11) **EP 2 380 734 A1**
(43) Date of publication of application: **26.10.2011**
(21) Application number: 11004244.7
(22) Date of filing: 07.02.2007
(51) Int. Cl.: B32B 27/00, B05D 5/06, B05D 7/24, B32B 27/10, D06N 3/00, D21H 27/00, D21H 27/02, B29C 59/00

(54) **Embrossed release sheet and apparatus and method for manufacturing same**

(30) Priority: 07.02.2006 JP 2006029160; 25.07.2006 JP 2006202505; 29.09.2006 JP 2006267074
(62) Divisional of application: 07708159.4
(71) Applicant: Dai Nippon Printing Co., Ltd., Tokyo 162-8001 (JP)
(72) Inventor: Shiina, Noriyuki, Shinjuku-ku Tokyo 162-8001 (JP); Kogo, Kyoko, Shinjuku-ku Tokyo 162-8001 (JP); Kubota, Fumihisa, Shinjuku-ku Tokyo 162-8001 (JP); Etou, Mineaki, Shinjuku-ku Tokyo 162-8001 (JP); Anazawa, Tomohiko, Shinjuku-ku Tokyo 162-8001 (JP); Takiguchi, Ryohei, Shinjuku-ku Tokyo 162-8001 (JP); Mukai, Mineo, Shinjuku-ku Tokyo 162-8001 (JP); Imamura, Shigeki, Shinjuku-ku Tokyo 162-8001 (JP); Miyasaka, Aya, Shinjuku-ku Tokyo 162-8001 (JP)
(74) Representative: Grünecker, Kinkeldey, Stockmair & Schwanhäusser

(57) **Abstract**

The invention provides an embossed release sheet comprising an embossed layer having concave portions and convex portions provided thereon, wherein upper surfaces of the convex portions are rougher than bottom surfaces of the concave portions. The invention further provides an apparatus and a method for manufacturing an embossed release sheet.

## Description

### TECHNICAL FIELD

The present invention relates to an embossing technology, and more particularly relates to an original sheet of an embossed release sheet, an embossed release sheet, a method for manufacturing an original sheet of an embossed release sheet, a method for manufacturing an embossed release sheet, an apparatus for manufacturing an embossed release sheet, a synthetic leather and a method for manufacturing a synthetic leather.

### BACKGROUND ART

A synthetic leather made of polyurethane, polyvinyl chloride or a combination of polyurethane and polyvinyl chloride is manufactured by using an embossed release paper. In the case of manufacturing a synthetic leather made of polyurethane, for example, a polyurethane resin paste is coated onto a release paper and the resin paste is dried and solidified at a temperature of 90°C to 140°C to form a surface film. Thereafter, a base is attached to the surface film by using a two-component polyurethane adhesive. The resultant structure is allowed to undergo reaction for 2 to 3 days in an ageing chamber at 40°C to 70°C. Finally, the release paper is released to obtain a synthetic leather made of polyurethane. Note that, as the polyurethane resin, those dissolvable in organic solvents are generally used. In recent years, however, aqueous polyurethane resins have been also used in consideration of environmental problems such as air pollution. In the case of using the aqueous polyurethane resin, drying is carried out at a high temperature of 150°C to 180°C.

In the case of manufacturing a synthetic leather made of polyvinyl chloride, a polyvinyl chloride sol is coated on a release paper and heated at 200°C to 250°C to cause the polyvinyl chloride sol to turn into a gel. Thus, a polyvinyl chloride foam layer is obtained. Thereafter, a base is attached to the polyvinyl chloride foam layer and the release paper is removed. Thus, a synthetic leather made of polyvinyl chloride is obtained. In the case of manufacturing a synthetic leather made of polyurethane and polyvinyl chloride, a polyurethane resin paste is coated on a release paper and then dried and solidified to form a surface film. Thereafter, a polyvinyl chloride foam layer is formed on the surface film, and then the surface film and a base are attached to each other. Finally, the release paper is removed to obtain a synthetic leather made of polyurethane and polyvinyl chloride. Note that a split leather may also be manufactured by attaching a natural leather to the synthetic leather.

The release paper used for manufacturing the synthetic leather made of polyurethane is obtained by extrusion coating of a thermoplastic resin such as polypropylene or 4-methyl-1-pentene on the paper and then embossing the resin. However, since a layer made of the thermoplastic resin is disposed on the top surface, the release paper cannot be used for manufacturing the synthetic leather made of polyvinyl chloride. The release paper used for manufacturing the synthetic leather made of polyvinyl chloride is obtained by coating a silicone resin on a paper and then embossing the resin. Note, however, that the release paper having the silicone resin coated directly on the paper has a problem that embossability is poor and uneven gloss is likely to occur. Japanese Examined Patent Application Publication No. Sho 63 (1988)-2780 discloses a release paper having an electron-beam curing resin, such as isodecyl acrylate, coated on a paper. However, the electron-beam curing resin reacts with isocyanate that is a two-component curable polyurethane curing agent. Thus, the release paper having a layer made of the electron-beam curing resin on the top surface is not suitable for manufacturing the synthetic leather made of polyurethane.

### DISCLOSURE OF INVENTION

According to a first aspect of the present invention, an original sheet of an embossed release sheet is provided, including: a support sheet; a plastic layer which is disposed on the support sheet and contains an uncured ionizing radiation or ultraviolet curable resin; and a release layer which is disposed on a surface of the plastic layer and contains addition-polymerized silicone.

According to a second aspect of the present invention, an embossed release sheet is provided, including: a support sheet; an embossed layer which is arranged on the support sheet, and is embossed and contains a resin cured by ionizing radiation or ultraviolet radiation; and a release layer which is arranged on a surface of the embossed layer and contains addition-polymerized silicone.

According to a third aspect of the present invention, a method for manufacturing an original sheet of an embossed release sheet is provided, including the steps of: coating a curable resin ink containing an uncured ionizing radiation or ultraviolet curable resin on a surface of a support sheet; forming a plastic layer containing the uncured ionizing radiation or ultraviolet curable resin on the surface of the support sheet by drying the curable resin ink; coating a silicone ink containing an addition polymerizable silicone material on a surface of the plastic layer; and addition-polymerizing the addition polymerizable silicone material.

According to a fourth aspect of the present invention, a method for manufacturing an embossed release sheet is provided, including the steps of: preparing an original sheet of an embossed release sheet including a support sheet, a plastic layer which is disposed on the support sheet and contains an uncured ionizing radiation or ultraviolet curable resin, and a release layer which is disposed on a surface of the plastic layer and contains addition-polymerized silicone; embossing the release layer and the plastic layer; and curing the ionizing radiation or ultraviolet curable resin contained in the plastic layer by ionizing radiation or ultraviolet radiation.

According to a fifth aspect of the present invention, an embossed release sheet is provided, including an embossed layer having concave portions and convex portions provided thereon. In the embossed release sheet, upper surfaces of the convex portions are rougher than bottom surfaces of the concave portions.

According to a sixth aspect of the present invention, an apparatus for manufacturing an embossed release sheet is provided, including: a roughening device which roughens a surface of a plastic layer; and a marking device which provides concave portions, of which bottom surfaces are flatter than the surface, in the roughened plastic layer.

According to a seventh aspect of the present invention, a method for manufacturing an embossed release sheet is provided, including the steps of: roughening a surface of a plastic layer; and providing concave portions, of which bottom surfaces are flatter than the surface, in the roughened plastic layer.

According to an eighth aspect of the present invention, a synthetic leather is provided, including a surface film having concave portions and convex portions provided thereon. In the synthetic leather, bottom surfaces of the concave portions are rougher than upper surfaces of the convex portions.

According to a ninth aspect of the present invention, a method for manufacturing a synthetic leather is provided, including the steps of: coating a molten resin on an embossed layer having concave portions and convex portions provided thereon, the convex portions having upper surfaces rougher than bottom surfaces of the concave portions; forming a surface film on the embossed layer by curing the coated molten resin; and releasing the surface film from the embossed layer.

### BRIEF DESCRIPTION OF THE DRAWINGS

Fig. 1 is a cross-sectional view of an embossed release sheet according to a first embodiment of the present invention.
Fig. 2 is a flowchart showing a method for manufacturing an embossed release sheet according to the first embodiment of the present invention.
Fig. 3 is a first cross-sectional view of the embossed release sheet according to the first embodiment of the present invention.
Fig. 4 is a second cross-sectional view of the embossed release sheet according to the first embodiment of the present invention.
Fig. 5 is a third cross-sectional view of the embossed release sheet according to the first embodiment of the present invention.
Fig. 6 is a fourth cross-sectional view of the embossed release sheet according to the first embodiment of the present invention.
Fig. 7 is a first flowchart showing a method for manufacturing a synthetic leather according to the first embodiment of the present invention.
Fig. 8 is a second flowchart showing a method for manufacturing a synthetic leather according to the first embodiment of the present invention.
Fig. 9 is a cross-sectional view of an embossed release sheet according to a second modified example of the first embodiment of the present invention.
Fig. 10 is a cross-sectional view of an embossed release sheet according to a second embodiment of the present invention.
Fig. 11 is a cross-sectional view of an embossed release sheet according to a third embodiment of the present invention.
Fig. 12 is a cross-sectional view of an embossed release sheet according to a fourth embodiment of the present invention.
Fig. 13 is a flowchart showing a method for manufacturing an embossed release sheet according to the fourth embodiment of the present invention.
Fig. 14 is a cross-sectional view of the embossed release sheet according to the fourth embodiment of the present invention.
Fig. 15 is a cross-sectional view of an embossed release sheet according to a modified example of the fourth embodiment of the present invention.
Fig. 16 is a cross-sectional view of an embossed release sheet according to a fifth embodiment of the present invention.
Fig. 17 is a schematic diagram of a laminator according to the fifth embodiment of the present invention.
Fig. 18 is a flowchart showing a method for manufacturing an embossed release sheet according to the fifth embodiment of the present invention.
Fig. 19 is a cross-sectional view of an embossed release sheet according to a sixth embodiment of the present invention.
Fig. 20 is a schematic diagram showing an apparatus for manufacturing an embossed release sheet according to the sixth embodiment of the present invention.
Fig. 21 is a cross-sectional view of an original sheet of an embossed release sheet according to the sixth embodiment of the present invention.
Fig. 22 is a cross-sectional view of a first step of a method for manufacturing an embossed release sheet according to the sixth embodiment of the present invention.
Fig. 23 is a cross-sectional view of a second step of the method for manufacturing an embossed release sheet according to the sixth embodiment of the present invention.
Fig. 24 is a cross-sectional view of a first step of a method for manufacturing a synthetic leather according to the sixth embodiment of the present invention.
Fig. 25 is a cross-sectional view of a second step of a method for manufacturing a synthetic leather according to the sixth embodiment of the present invention.
Fig. 26 is a cross-sectional view of a third step of a method for manufacturing a synthetic leather according to the sixth embodiment of the present invention.
Fig. 27 is a cross-sectional view of the synthetic leather according to the sixth embodiment of the present invention.
Fig. 28 is a first cross-sectional view of an embossed release sheet according to another embodiment of the present invention.
Fig. 29 is a second cross-sectional view of an embossed release sheet according to another embodiment of the present invention.

### BEST MODE FOR CARRYING OUT THE INVENTION

Hereinafter, embodiments of the present invention will be described. In the following description of the drawings, the same or similar parts will be denoted by the same or similar reference numerals. However, the drawings are conceptual. Therefore, specific dimensions and the like should be determined by taking consideration of the following description. Moreover, as a matter of course, also among the drawings, portions which have different dimensional relationships and ratios from each other are included.

### (First Embodiment)

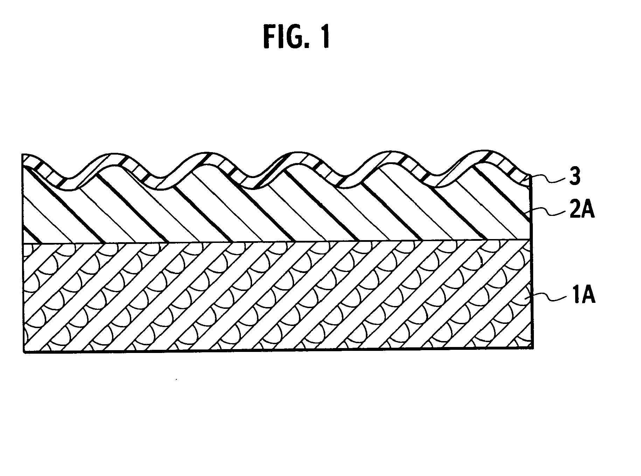

As shown in Fig. 1, an embossed release sheet according to a first embodiment includes: a support sheet 1A; an embossed layer 2A which is arranged on a surface of the support sheet 1A and contains a resin cured by ionizing radiation or ultraviolet radiation; and a release layer 3 which is arranged on the surface of the embossed layer 2A and contains addition-polymerized silicone. The embossed layer 2A and the release layer 3 are embossed for transferring an embossed pattern of leather of an animal or the like.

As for the support sheet I A, uncoated paper and the like can be used, such as high-quality paper, kraft paper, machine-glazed kraft paper, machine glazed paper, glassine paper and cup base paper. Moreover, the following can also be used as the support sheet 1A: coated paper having an inorganic pigment-coated layer, such as art paper, coat paper and cast coated paper; synthetic paper using no natural pulp; and the like.

In the case where the embossed release sheet according to the first embodiment is used in an environment below 200°C, acid paper made by using a fixing agent, such as aluminum sulfate, and a rosin sizing agent can be used as the support sheet 1A. In the case where the embossed release sheet is used in an environment above 200°C for producing a polyvinyl chloride synthetic leather, alkaline paper made by using a neutral rosin sizing agent using no aluminum sulfate as a fixing agent or paper made by using a neutral sizing agent such as alkyl ketene dimer (AKD) and alkenyl succinic anhydride (ASA) can be used as the support sheet 1A. Moreover, alkaline paper made in a neutral region of pH6 to pH9 by using aluminum sulfate can also be used as the support sheet 1A.

Note that the support sheet 1A may contain a fixing agent such as cationic polyacrylamide and cationic starch. Moreover, the support sheet 1A may contain various papermaking fillers, a retention aid, a dry paper strength additive, a wet paper strength additive, a binder, a dispersant, a flocculant, a plasticizer, an adhesive and the like. Moreover, the support sheet 1A may have chemical resistance.

The embossed layer 2A contains the resin cured by ionizing radiation or ultraviolet radiation. Here, the resin cured by ionizing radiation or ultraviolet radiation means a resin such as polyurethane acrylate, which is formed by subjecting a reaction product to ionizing radiation or ultraviolet radiation, the reaction product being obtained by reaction between an isocyanate compound and a methacrylic compound having a methacryloyl group and reacting with the isocyanate compound. Alternatively, the resin cured by ionizing radiation or ultraviolet radiation means a resin such as polyurethane acrylate, which is formed by subjecting a reaction product to ionizing radiation or ultraviolet radiation, the reaction product being obtained by reaction between an isocyanate compound and an acrylic compound having an acryloyl group and reacting with the isocyanate compound.

Note that the "isocyanate compound" is a compound having one or more isocyanate groups. Examples of the "isocyanate compound" include aliphatic isocyanate such as phenyl isocyanate, xylyl isocyanate, naphthyl isocyanate, hexamethylene diisocyanate, lysine methyl ester diisocyanate and 2, 4, 4-trimethyl hexamethylene diisocyanate. Moreover, the examples of the "isocyanate compound" also include cycloaliphatic isocyanate such as isophorone diisocyanate and 4, 4'-methylene-bis(cyclohexyl isocyanate), and aromatic isocyanate such as tolylene diisocyanate, 4, 4'-diphenylmethane diisocyanate and naphthalene-1, 5'-diisocyanate. Furthermore, the examples of the "isocyanate compound" also include tolylene diisocyanate trimer and a reaction product of tolylene diisocyanate and an active hydrogen compound. Here, the active hydrogen compound is, for example, trimethylolpropane. A molar ratio of tolylene diisocyanate to trimethylolpropane is, for example, 3:1.

Moreover, the "isocyanate compound" may also be compounds having isocyanate groups bound to a nonaromatic hydrocarbon ring, for example, a trimer of cycloaliphatic isocyanate compounds. Alternatively, the "isocyanate compound" may also be a reaction product of the trimer of cycloaliphatic isocyanate compounds and the active hydrogen compound. Examples of the cycloaliphatic isocyanate compound include isophorone diisocyanate, hydrogenated tolylene diisocyanate, hydrogenated xylylene diisocyanate, hydrogenated diphenylmethane diisocyanate, and the like.

Alternatively, the "isocyanate compound" may also be an isophorone diisocyanate trimer and a reaction product of isophorone diisocyanate and trimethylolpropane. Here, a molar ratio of isophorone diisocyanate to trimethylolpropane is, for example, 3:1. Note that the respective substances classified as the "isocyanate compound" described above may be used individually or in combination.

The "methacrylic compound having a methacryloyl group and reacting with the isocyanate compound" is, for example, a methacrylic compound having a hydroxyl group or a carboxyl group. Moreover, the "acrylic compound having an acryloyl group and reacting with the isocyanate compound" is, for example, an acrylic compound having a hydroxyl group or a carboxyl group.

Examples of the methacrylic compound having the hydroxyl group include hydroxy ester that is a reaction product of methacrylic acid and a polyhydroxy compound. Examples of the acrylic compound having the hydroxyl group include hydroxy ester that is a reaction product of acrylic acid and a polyhydroxy compound. Note that ethylene oxide, propylene oxide, caprolactone or the like may be added to a hydroxyl group of hydroxy ester. Moreover, the hydroxyl group of hydroxy ester may be partially esterified by monocarboxylic acid.

Furthermore, examples of the methacrylic compound having the hydroxyl group and the acrylic compound having the hydroxyl group include hydroxy methacrylate, hydroxy acrylate, isocyanurate diacrylate, pentaerythritol diacrylate monostearate, 2-hydroxy-3-phenoxy propyl acrylate and the like, such as hydroxyethyl methacrylate, hydroxyethyl acrylate, hydroxypropyl methacrylate, hydroxypropyl acrylate, hydroxybutyl methacrylate, hydroxybutyl acrylate, trimethylolpropane diacrylate, pentaerythritol triacrylate, dipentaerythritol tetraacrylate and dipentaerythritol pentaacrylate. Note that caprolactone, ethylene oxide, propylene oxide, ethylene oxide/propylene oxide, and the like may be added thereto.

The "methacrylic compound having a carboxyl group and reacting with the isocyanate compound" is, for example, a compound obtained by reacting methacrylic acid itself or hydroxy methacrylate with carboxylic anhydride such as maleic anhydride, succinic anhydride, phthalic anhydride and tetrahydrophthalic anhydride. The "acrylic compound having a carboxyl group and reacting with the isocyanate compound" is, for example, a compound obtained by reacting acrylic acid itself or hydroxy acrylate with carboxylic anhydride such as maleic anhydride, succinic anhydride, phthalic anhydride and tetrahydrophthalic anhydride.

Furthermore, examples of the "methacrylic compound having a carboxyl group and reacting with the isocyanate compound" or the "acrylic compound having a carboxyl group and reacting with the isocyanate compound" include pentaerythritol triacrylate succinic acid monoester, dipentaerythritol pentaacrylate succinic acid monoester, pentaerythritol triacrylate maleic acid monoester, dipentaerythritol pentaacrylate maleic acid monoester, pentaerythritol triacrylate phthalic acid monoester, dipentaerythritol triacrylate phthalic acid monoester, pentaerythritol triacrylate tetrahydrophthalic acid monoester, dipentaerrythritol pentaacrylate tetrahydrophthalic acid monoester, and the like.

The reaction product of the isocyanate compound and the methacrylic compound having the hydroxyl group or the reaction product of the isocyanate compound and the acrylic compound having the hydroxyl group is called "urethane acrylate". Moreover, the reaction product of the isocyanate compound and the methacrylic compound having the carboxyl group becomes a compound having a structure with a polymerizable methacryloyl group bound through an amide group. Furthermore, the reaction product of the isocyanate compound and the acrylic compound having the carboxyl group becomes a compound having a structure with a polymerizable acryloyl group bound through an amide group.

Note that the embossed layer 2A, shown in Fig. 1, may further contains a residue of another active hydrogen compound which is added to allow the isocyanate compound to react with the methacrylic compound or the acrylic compound and which reacts with the isocyanate compound. Examples of the "active hydrogen compound" include a hydroxyl group-containing compound, an amino group-containing compound, a carboxyl group-containing compound and the like.

Examples of the "hydroxyl group-containing compound" include: polyhydric alcohols having three or more hydroxyl groups, such as glycerin, trimethylolpropane, trimethylolethane, 1,2,6-hexanetriol, 2-hydroxyethyl-1,6-hexanediol, 1,2,4-butanetriol, erythritol, sorbitol, pentaerythritol and dipentaerythritol; aliphatic glycols such as ethylene glycol, diethylene glycol, propylene glycol, dipropylene glycol, tripropylene glycol, 1,2-butanediol, 1,3-butanediol, 1,4-butanediol, 2,3-butanediol, 2-methyl-1,3-propanediol, 2,2-diethyl-1,3-propanediol, 2-methyl-2-propyl-1,3-propanediol, 2-butyl-2-ethyl-1,3-propanediol, 1,5-pentanediol, 3-methyl-1,5-pentanediol, 2-methyl-2,4-pentanediol, 1,6-hexanediol, 2-ethyl-1,3-hexanediol, neopentyl glycol, 1,3,5-trimethyl-1,3-pentanediol, 2,2,4-trimethyl-1,3-pentanediol, 1,8-octanediol, 1,9-nonanediol and 2-methyl-1,8-octanediol; alicyclic glycols such as 1,4-cyclohexanediol and 1,4-cyclohexanedimethanol; aromatic glycols such as xylylene glycol and bishydroxyethoxybenzene; and the like.

Moreover, the examples of the "hydroxyl group-containing compound" also include high molecular weight polyol such as polyether polyol, polyester polyol, polyether ester polyol, polycarbonate polyol and polyacryl polyol.

Examples of the polyether polyol include those which are obtained by addition polymerization of alkylene oxide such as ethylene oxide or propylene oxide to; glycols such as bisphenol A, ethylene glycol, propylene glycol and diethylene glycol; polyols having three or more hydroxyl groups such as glycerin, trimethylolethane, trimethylolpropane and pentaerythritol; polyamines such as ethylenediamine and toluenediamine. Also included in the examples are polytetramethylene ether glycols obtained by ring-opening polymerization of tetrahydrofuran; and the like.

Examples of the polyester polyol include compounds obtained by polycondensation reaction between carboxylic acids and diol or an aromatic polyhydroxy compound. Examples of the carboxylic acids include dicarboxylic acids such as succinic acid, adipic acid, sebacic acid, azelaic acid and phthalic acid or tri- or tetra-carboxylic acids such as trimellitic acid and pyromellitic acid. Examples of the diol include ethylene glycol, propylene glycol, 1,4-butanediol, 1,5-pentanediol, 3-methyl-1,5-pentanediol, 2,2-diethylpropanediol, 2-ethyl-2-butylpropanediol, 1,6-hexanediol, neopentylglycol, diethylene glycol, 1,4-cyclohexanediol and 1,4-cyclohexanedimethanol and the like. Examples of the aromatic polyhydroxy compound include triols such as trimethylolpropane and glycerin, bisphenol A, bisphenol F and the like.

Examples of the polyether ester polyol include a reaction product between polyester glycol and alkylene oxide, and a reaction product between ether group-containing diol or a mixture of the ether group-containing diol with glycol and dicarboxylic acid or dicarboxylic acid anhydride. For example, polyadipate, polytetramethylene ether adipate or the like can be used.

The polycarbonate polyol is obtained by alcohol-eliminating condensation reaction between a polyhydric alcohol and a dialkyl carbonate such as diethyl. Alternatively, the polycarbonate polyol is obtained by phenol-eliminating condensation reaction between a polyhydric alcohol and diphenylcarbonate. Alternatively, the polycarbonate polyol is obtained by ethylene glycol-eliminating condensation reaction between a polyhydric alcohol and ethylene carbonate. Examples of the polyhydric alcohol to be used in these condensation reactions include: aliphatic diols such as 1,6-hexanediol, diethylene glycol, propylene glycol, 1,4-butanediol, 1,5-pentanediol, 3-methyl-1,5-pentanediol, 2,2-diethylpropanediol, 2-ethyl-2-butylpropanediol and neopentyl glycol; alicyclic diols such as 1,4-cyclohexanediol and 1,4-cyclohexanedimethanol; and the like.

Examples of the "amino group-containing compound (amine compound)" include hexamethylenediamine, xylylenediamine, isophoronediamin, N,N-dimethylethylenediamine and amino alcohols such as monoethanolamine and diethanolamine.

Examples of the "carboxyl group-containing compound (organic carboxylic acid)" include lauric acid, stearic acid, oleic acid, palmitic acid, adipic acid, sebacic acid, phthalic acid, isophthalic acid and terephthalic acid.

Moreover, the embossed layer 2A, shown in Fig. 1, may contain a residue of a solvent used for reaction between the isocyanate compound and the methacrylic compound or the acrylic compound. Here, the solvent is, for example, an inert solvent. Examples of the inert solvent include: an aromatic hydrocarbon solvent such as toluene and xylene; a ketone solvent such as methyl ethyl ketone, methyl isobutyl ketone and cyclohexanone; an ester solvent such as ethyl acetate, butyl acetate and isobutyl acetate; a glycol ether ester solvent such as diethylene glycol ethyl ether acetate, propylene glycol methyl ether acetate, 3-methyl-3-methoxybutyl acetate and ethyl 3-ethoxypropionate; an ether solvent such as tetrahydrofuran and dioxane; an aprotic polar solvent such as N-methyl pyrrolidone; and the like.

The release layer 3, shown in Fig. 1, has a thickness of, for example, 0.01 µm to 20 µm and contains addition-polymerized silicone obtained by addition polymerization of an addition polymerization type silicone material. The addition polymerization type silicone material contains at least alkenyl group-containing organopolysiloxane and organohydrogen polysiloxane.

Examples of the alkenyl group include a vinyl group, an allyl group, a butenyl group, a pentenyl group, a hexenyl group and the like. Examples of the organopolysiloxane include dimethylvinylsiloxy-endblocked dimethylpolysiloxane, dimethylvinylsiloxy-endblocked dimethylsiloxane-methylvinylsiloxane copolymers, dimethylvinylsiloxy-endblocked dimethylsiloxane-methylphenylsiloxane copolymers, trimethylsiloxy-endblocked methylvinylpolysiloxane, trimethylsiloxy-endblocked dimethylsiloxane-methylvinylsiloxane copolymers, trimethylsiloxy-endblocked dimethylsiloxane-methyl (5-hexenyl) siloxane copolymers, dimethylvinylsiloxy-endblocked dimethylsiloxane-methylvinylsiloxane-methylphenylsiloxane copolymers, dimethylhydroxy-endblocked methylvinylpolysiloxane, and dimethylhydroxy-endblocked dimethylsiloxane-methylvinylsiloxane copolymers. The respective substances classified as the alkenyl group-containing organopolysiloxane described above may be contained individually or in combination of two kinds or more thereof in the release layer 3.

The alkenyl group-containing organopolysiloxane is obtained by the following chemical formula, for example. 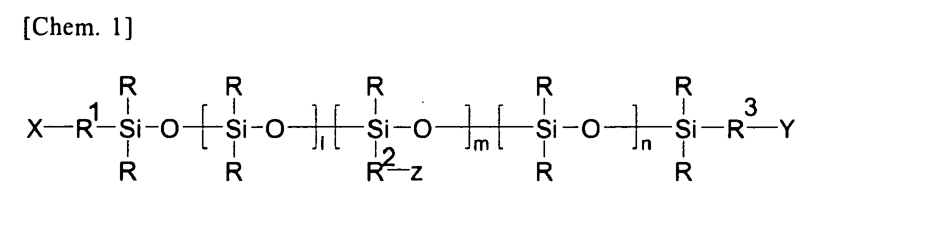 R in the formula is basically a methyl group but may be another aryl group such as an alkyl group and a phenyl group or a combination of aryl groups. I+m+n is one or an integer more than one. Moreover, siloxane units thereof may be randomly arranged. At least one of X, Y and Z is an addition-polymerizable group such as a vinyl group, an allyl (-CH₂-CH=CH₂) group, a methacryloyl group and an acryloyl group. R¹, R² and R³ are single bonds or alkylene groups. A molecular weight of the alkenyl group-containing organopolysiloxane is, for example, 3500 to 20000.

Examples of the organohydrogen polysiloxane include trimethylsiloxy-endblocked methylhydrogen polysiloxanes, trimethylsiloxy-endblocked dimethylsiloxane/methylhydrogen siloxane copolymers, dimethylhydrogensiloxy-endblocked dimethyl polysiloxanes, dimethylhydrogensiloxy-endblocked dimethylsiloxane/methylhydrogen siloxane copolymers, cyclic methylhydrogen polysiloxanes, cyclic methylhydrogen siloxane/dimethylsiloxane copolymers, and the like. As the organohydrogen polysiloxane, compound from straight-chain low-molecular weight to high-molecular weight can be used. Moreover, as the organohydrogen polysiloxane, a compound having branches, a resinous compound as a cyclic compound or the like can also be used. The respective substances classified as the organohydrogen polysiloxane described above may be contained individually or in combination of two kinds or more thereof in the release layer 3.

A chemical formula for the organohydrogen polysiloxane may be obtained by replacing at least one of X-R¹-, -R²-Z and -R³-Y in the above chemical formula for the alkenyl group-containing organopolysiloxane with a hydrogen atom.

The release layer 3, shown in Fig. 1, may further contain a platinum curing catalyst used for addition polymerization of the addition polymerization type silicone material. Examples of the platinum curing catalyst include chloroplatinic acid, an alcohol solution of chloroplatinic acid, a complex of chloroplatinic acid and olefin, a complex of chloroplatinic acid and vinylsiloxane, a complex of chloroplatinic acid and ketones, alumina fine powder carrying platinum, silica fine powder carrying platinum, platinum black and the like. The respective substances classified as the platinum curing catalyst described above may be contained individually or in combination of two kinds or more thereof in the release layer 3.

Note that the release layer 3, shown in Fig. 1, may further contain nonfunctional silicone and silicone resin for controlling releasability, in addition to the alkenyl group-containing organopolysiloxane, the organohydrogen polysiloxane and the platinum curing catalyst. Moreover, the release layer 3 may contain an anti-foaming agent, a coloring agent, a surfactant and the like.

Furthermore, the release layer 3 may contain a residue of a solvent. Examples of the solvent include: an aromatic hydrocarbon solvent such as toluene and xylene; a saturated aliphatic hydrocarbon solvent such as cyclohexane, methylcyclohexane and ethylcyclohexane; a ketone solvent such as methyl ethyl ketone, methyl isobutyl ketone and cyclohexanone; an ester solvent such as ethyl acetate, butyl acetate and isobutyl acetate; a glycol ether ester solvent such as diethylene glycol ethyl ether acetate, propylene glycol methyl ether acetate and propylene glycol monomethyl ether; an ether solvent such as tetrahydrofuran and dioxane; an aprotic polar solvent such as N-methyl pyrrolidone; and the like.

The embossed release sheet according to the first embodiment described above includes the embossed layer 2A containing the resin cured by ionizing radiation or ultraviolet radiation and further includes the release layer 3 containing the addition-polymerized silicone on the top surface. Thus, the embossed release sheet has embossability, heat resistance and durability, and can be repeatedly used for manufacturing synthetic leather such as polyurethane, polyvinyl chloride and semi-synthetic leather. Moreover, the embossed release sheet according to the first embodiment includes the release layer 3 containing the addition-polymerized silicone with high releasability on the top surface. Thus, excellent releasability can be maintained even if the embossed release sheet is repeatedly used for manufacturing synthetic leather. Therefore, the use of the embossed release sheet according to the first embodiment enables reduction in production cost of the synthetic leather.

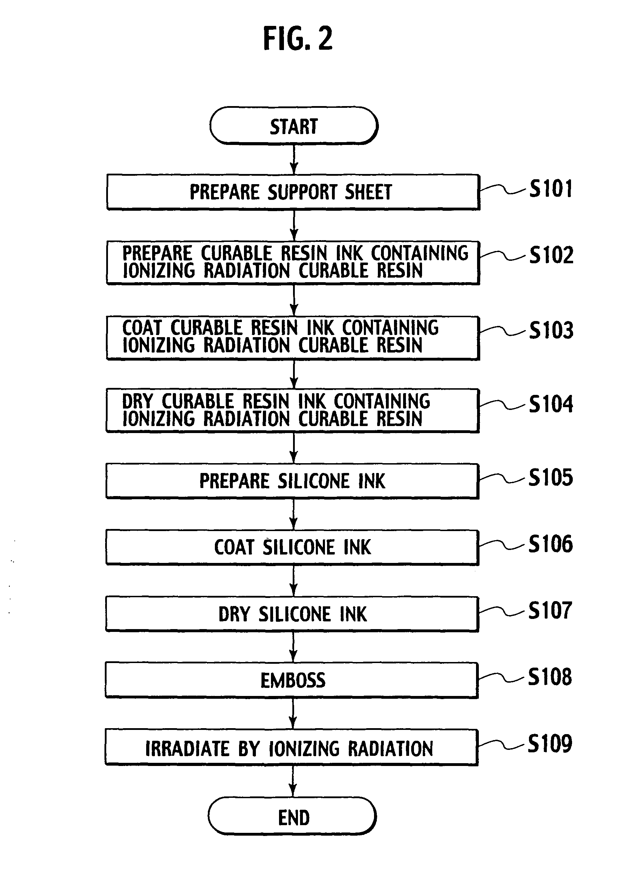

Next, with reference to a flowchart shown in Fig. 2, description will be given of a method for manufacturing an embossed release sheet according to the first embodiment.

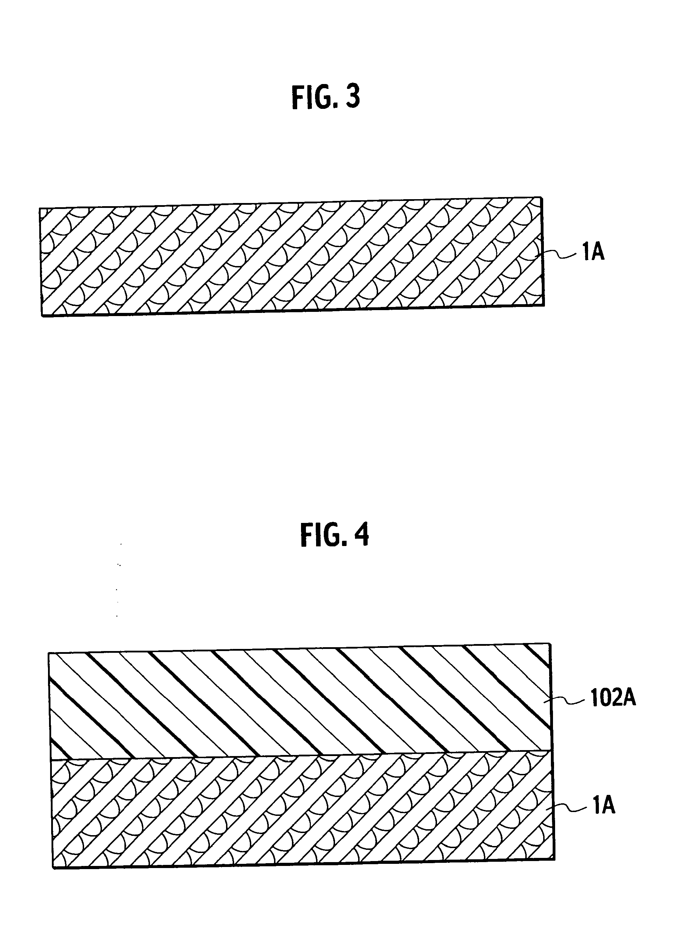

(a) In Step S101, a support sheet 1A is prepared, as shown in Fig. 3. In order to facilitate embossing to be performed later, a basis weight that is a mass of the support sheet 1A per square meter may be set to, for example, 15 g/m² to 300 g/m², specifically 80 g/m² to 250 g/m², more specifically 100 g/m² to 180 g/m². Note that, by using mixed pulp made from hardwood pulp and at least 20% of softwood pulp as the support sheet 1A, shaping properties, strength and smoothness of the embossing can be improved. In Step S102, a curable resin ink containing an ionizing radiation or ultraviolet curable resin is prepared by reacting an isocyanate compound with a methacrylic compound or an acrylic compound in a solvent. The use of the solvent facilitates control of reaction between the isocyanate compound and the methacrylic compound or the acrylic compound and also enables adjustment of a viscosity of a reaction product. Although one kind of solvent may be used, several kinds of solvents may be used to control drying rates of the solvents. The solvent is added, for example, in such a manner that a concentration of the ionizing radiation or ultraviolet curable resin in the curable resin ink is set to 30 mass% to 80 mass%. A viscosity of the curable resin ink at 25°C is, for example, 10 mPa·s to 3000 mPa·s.

(b) In reaction between the isocyanate compound and the methacrylic compound or the acrylic compound, an active hydrogen compound may be added. A molar ratio of a reactive group in the active hydrogen compound to a reactive group in the methacrylic compound or the acrylic compound may be set to 50% or less or 40% or less. Thus, the active hydrogen compound can be prevented from impairing properties of the ionizing radiation or ultraviolet curable resin. Note that selection and simultaneous use of the active hydrogen compound raise a softening point of a plastic layer to be obtained, thereby enabling an increase in flexibility of an embossed layer 2A to be finally obtained. Moreover, in reaction between the isocyanate compound and the methacrylic compound or the acrylic compound, 0.01 mass% to 0.1 mass% of organic tin catalyst may be added to the isocyanate compound and the methacrylic compound or the acrylic compound. A reaction temperature is, for example, 50°C to 80°C.

(c) Feed ratio of the isocyanate compound to the methacrylic compound or the acrylic compound and another active hydrogen compound to be simultaneously used in some cases is as follows. For example, when an isocyanate group in the isocyanate compound is 1 mol, a functional group in the methacrylic compound or the acrylic compound and another active hydrogen compound is 0.5 mol or more, preferably 1 mol or more. A reaction time is, for example, about 3 hours to 8 hours. Note, however, that an isocyanate group content in the curable resin ink may be tracked by analysis and the reaction may be stopped when the content reaches a target value.

(d) A softening point of the ionizing radiation or ultraviolet curable resin is 40°C or higher, preferably 50°C or higher, more preferably 60°C or higher. When the softening point of the ionizing radiation or ultraviolet curable resin is lower than 40°C, blocking occurs before the resin is cured by ionizing radiation or ultraviolet radiation, or tack-freeness and embossability are deteriorated. Note that the softening point of the ionizing radiation or ultraviolet curable resin with the solvent removed is measured by using ARES-2KFRTN1, manufactured by Rheometrix Corp. A measuring mode is a 25-mm parallel plate in a test on temperature dependency of dynamic viscoelasticity. A measuring temperature range is -50°C to 150°C. A vibration frequency is one rad/sec. The temperature at which a melt viscosity is 5000 Pa·s is set to be the softening point.

(e) A methacrylic group or an acrylic group in the ionizing radiation or ultraviolet curable resin is not less than 5 mass%, preferably not less than 10 mass%, as calculated on the premise that a molecular weight of an olefinic double bond (-C=C-) is 24. When the methacrylic group or acrylic group content is small, a crosslink density after curing by ionizing radiation or ultraviolet radiation is lowered. Consequently, solvent resistance, heat resistance and the like are not sufficient. As a result, releasability is lowered and shaping sag occurs in polyvinyl chloride film formation, Note that the content of the olefinic double bond is measured by infrared spectroscopy (IR), nuclear magnetic resonance (NMR) or the like. However, when the production process is known, the content of the methacrylic group or acrylic group can also be determined by calculation based on the feed amount.

(f) In Step S 103, the curable resin ink is coated on the support sheet 1A by direct gravure coating, reverse gravure coating, gravure offset coating, microgravure coating, direct roll coating, reverse roll coating, curtain coating, knife coating, air knife coating, bar coating, die coating, spray coating or the like. Thereafter, in Step S104, the solvent contained in the curable resin ink is evaporated in a drying oven to form a plastic layer 102A containing uncured ionizing radiation or ultraviolet curable resin on the support sheet 1A, as shown in Fig. 4. A temperature of the drying oven is set, for example, at 90°C to 130°C, which is higher than the softening point of the ionizing radiation or ultraviolet curable resin and lower than the temperature at which the ionizing radiation or ultraviolet curable resin melts. By setting a mass of the plastic layer 102A after drying to, for example, 1 g/m² to 40 g/m², preferably 5 g/m² to 20 g/m², embossability to be described later is improved. The plastic layer 102A which is formed on the support sheet 1A and contains the ionizing radiation or ultraviolet curable resin is uncured until the layer is subjected to ionizing radiation or ultraviolet radiation. However, since the plastic layer is tack-free, no blocking occurs. Thus, the support sheet 1A having the plastic layer 102A formed on its surface can be rolled up.

(g) In Step S105, a silicone ink containing alkenyl group-containing organopolysiloxane, organohydrogen polysiloxane and platinum curing catalyst is prepared. The alkenyl group-containing organopolysiloxane, the organohydrogen polysiloxane and the platinum curing catalyst are selected in terms of compatibility, wettability and releasability of a release layer 3 to be formed, non-migration characteristics of silicone, and the like. In order to improve the releasability and strength of the release layer 3 and to reduce unreacted reactive groups, a compounding ratio of the alkenyl group-containing organopolysiloxane to the organohydrogen polysiloxane is determined, for example, by a molar ratio of reactive groups contained in the alkenyl group-containing organopolysiloxane to reactive groups contained in the organohydrogen polysiloxane, and is set to 4:1 to 1:4, preferably 1:1 to 1:3. Moreover, 5 to 200 mass parts of the platinum curing catalyst, for example, are added to 100 mass parts of the alkenyl group-containing organopolysiloxane and the organohydrogen polysiloxane in total.

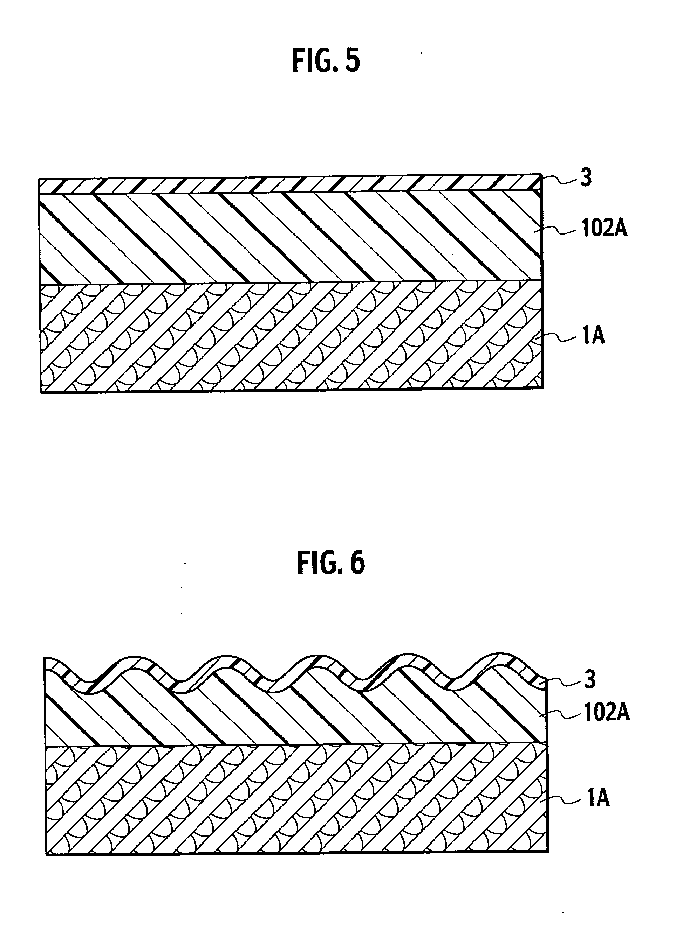

(h) In Step S106, the silicone ink is coated on the plastic layer 102A by direct gravure coating, reverse gravure coating, direct roll coating, reverse roll coating or the like. In Step S107, a solvent contained in the silicone ink is dried in the drying oven and an addition polymerization type silicone material is addition-polymerized. Thus, the release layer 3 containing the addition-polymerized silicone is formed on the plastic layer 102A, as shown in Fig. 5. As a result, an original sheet of the embossed release sheet according to the first embodiment is obtained. By setting a mass of the release layer 3 after drying to, for example, 0.1 g/m² to 3.0 g/m² or 0.2 g/m² to 1.0 g/m², embossability and releasability to be described later are improved.

(i) In Step S108, the release layer 3 and the plastic layer 102A are embossed as shown in Fig. 6 by pressing an embossing roll against the release layer 3 and the plastic layer 102A, the embossing roll being heated to or above a softening temperature of the ionizing radiation or ultraviolet curable resin contained in the plastic layer 102A and having an uneven pattern such as an embossed pattern. In this event, the plastic layer 102A is heated to the temperature of, for example, 50°C to 150°C, which is higher than the softening point of the ionizing radiation or ultraviolet curable resin and lower than its melting temperature. As a heating method, the embossing roll itself, which is made of metal or the like, may be heated by allowing vapor to pass through a hole in the embossing roll. Alternatively, a preheating method may be adopted, by which the plastic layer 102A is heated immediately before embossing. A pressure of the embossing roll is, for example, 3.92 MPa (40 kgf/cm) to 9.81 MPa (100 kgf/cm). Note that, since the release layer 3 containing the addition-polymerized silicone is disposed on the top surface, the embossing roll is easily released from the release layer 3. In the case of using the embossing roll, double-side embossing may be carried out by using the embossing roll as a male mold and a backup roll as a female mold, or single-side embossing may be carried out by using a backup roll with no uneven pattern. Moreover, a belt-type or plate-type pressing machine may be used for the embossing.

(j) In Step S109, ionizing radiation such as electron beams or ultraviolet radiation is applied to the plastic layer 102A containing the ionizing radiation or ultraviolet curable resin through the release layer 3. Consequently, the embossed layer 2A which is cured between the support sheet 1A and the release layer 3 and contains the ionizing radiation or ultraviolet curable resin is formed. Thus, the embossed release sheet according to the first embodiment shown in Fig. 1 is obtained. Note that the ionizing radiation or ultraviolet radiation may be applied from the side of the plastic layer 102A. As a light source of the ultraviolet radiation, a low-pressure mercury lamp, a medium-pressure mercury lamp, a high-pressure mercury lamp, a metal halide lamp, a xenon lamp, a tungsten lamp and the like can be used. As a method for irradiating with electron beams, a scanning method, a curtain beam method, a broad beam method and the like can be used. An accelerating voltage of the electron beams is, for example, 50 kV to 300 kV.

According to the method for manufacturing an embossed release sheet according to the first embodiment described above, the plastic layer 102A is first formed on the surface of the support sheet 1A, as shown in Fig. 4. The plastic layer 102A is solid and tack-free at room temperature. However, during embossing, plasticity and flexibility of the plastic layer 102A are increased by heating and thus shaping properties are improved. Here, if the embossing roll comes into direct contact with the plastic layer 102A, the plastic layer 102A adheres to the embossing roll. Thus, it is difficult to release the plastic layer 102A from the embossing roll. On the other hand, according to the method for manufacturing an embossed release sheet according to the first embodiment, as shown in Fig. 5, the release layer 3 containing the addition-polymerized silicone is formed on the plastic layer 102A before embossing. The addition-polymerized silicone contained in the release layer 3 realizes excellent heat resistance and flexibility. Thus, the release layer 3 can be easily released from the embossing roll. Moreover, ionizing radiation or ultraviolet radiation to the plastic layer 102A containing the ionizing radiation or ultraviolet curable resin through the release layer 3 is applied after the embossing. The ionizing radiation or ultraviolet curable resin is cured to form the embossed layer 2A shown in Fig. 1 between the support sheet 1A and the release layer 3. The embossed layer 2A has better shape stability, heat resistance, solvent resistance and durability than the plastic layer 102A. Therefore, according to the method for manufacturing an embossed release sheet according to the first embodiment, the embossed release sheet which can be repeatedly used and has excellent releasability can be produced.

Note that examples of a thermosetting silicone material include a condensation polymerizable silicone material. However, condensation-polymerized silicone obtained by condensation polymerization of the condensation polymerizable silicone material has low releasability. Moreover, condensation polymerization reaction requires long-term heating at a high temperature of 150°C or higher. Thus, if the condensation polymerizable silicone material is added, instead of the addition polymerizable silicone material, to the silicone ink, the plastic layer 102A may be softened or cured. Moreover, radical-polymerized silicone obtained by radical polymerization of a radical polymerizable silicone material having an acryloyl group has a low softening point. Thus, blocking is likely to occur. Therefore, if the radical polymerizable silicone material is added, instead of the addition polymerizable silicone material, to the silicone ink, even the radical polymerizable silicone material having the softening point improved is softened at the temperature during embossing. Thus, there is a problem such that the material adheres to the embossing roll or seeps into the plastic layer 102A. On the other hand, the addition-polymerizable silicone material undergoes addition polymerization reaction at a relatively low temperature of 130°C or lower and thus is rapidly cured. Consequently, even if the addition polymerizable silicone material contained in the silicone ink is heated to be cured, the plastic layer 102A is not cured. Moreover, since the addition polymerizable silicone material is rapidly cured, blocking of uncured silicone can also be suppressed.

Note that embossing in a woodgrain or leaf pattern may be carried out before Step S107. Thus, a synthetic leather having a matte and specific pattern can be produced.

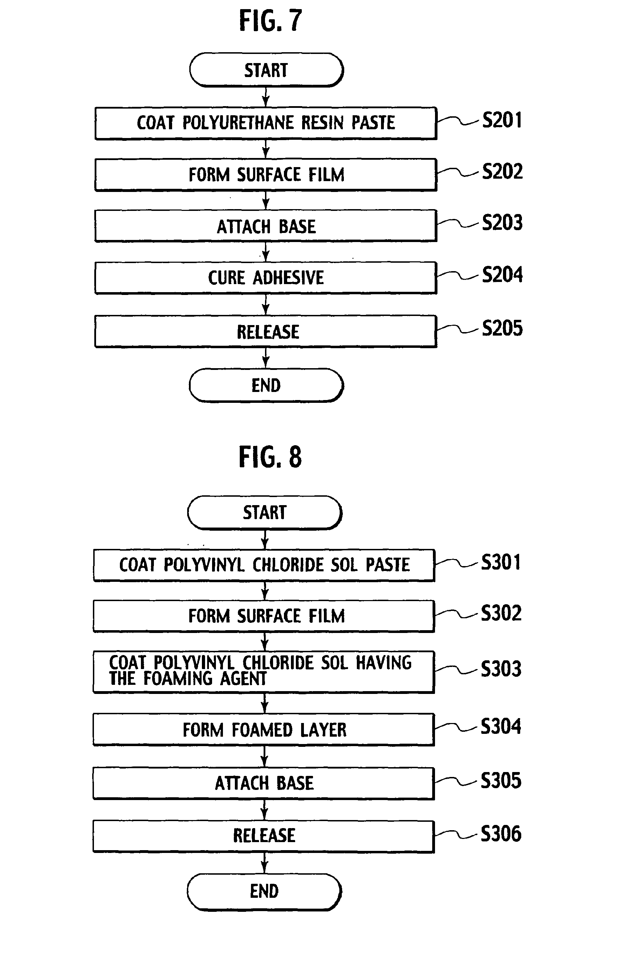

Next, with reference to a flowchart shown in Fig. 7, description will be given of a method for manufacturing a polyurethane synthetic leather according to the first embodiment.

In Step S201, a polyurethane resin paste is coated on the embossed release sheet shown in Fig. 1 by knife coating, roll coating, gravure coating or the like. A solid content of the polyurethane resin is, for example, 20 mass% to 50 mass%. In Step S202, the polyurethane resin paste is dried at a temperature of 90°C to 140°C to form a surface film on the embossed release sheet. In Step S203, an inner sheet such as a base is attached to the surface film by using a two-component polyurethane adhesive. In Step S204, the two-component polyurethane adhesive is allowed to undergo reaction for a couple of days in an ageing chamber at 40°C to 70°C to attach the surface film to the inner sheet. In Step S205, the embossed release sheet is released from the surface film. Thus, the polyurethane synthetic leather is completed.

Next, with reference to a flowchart shown in Fig. 8, description will be given of a method for manufacturing a polyvinyl chloride synthetic leather according to the first embodiment.

In Step S301, a polyvinyl chloride sol paste is coated on the embossed release sheet shown in Fig. 1 by knife coating, roll coating, gravure coating or the like. Note that a plasticizer such as dioctyl phthalate and dilauryl phthalate, a foaming agent, a stabilizer and the like, may be added to the polyvinyl chloride sol and mixed and dispersed. In Step S302, the polyvinyl chloride sol paste is heated to turn into a gel. Thus, a surface film is formed on the embossed release sheet. In Step S303, the polyvinyl chloride sol having the foaming agent added thereto is coated on the surface film. In Step S304, the foaming agent is heated to 200°C to 250°C to form a foamed layer on the surface film. In Step S305, an inner sheet such as a base is attached to the foamed layer by using an adhesive. In Step S306, the embossed release sheet is released from the surface film. Thus, the polyvinyl chloride synthetic leather is completed.

### (First Modified Example of First Embodiment)

The embossed layer 2A, shown in Fig. 1, may contain only the reaction product between the isocyanate compound and the methacrylic compound or the acrylic compound but may further contain a film forming resin and the like for modifying curing characteristics of the reaction product.

Examples of the film forming resin include methacrylic resin, chlorinated polypropylene, epoxy resin, polyurethane resin, polyester resin, polyvinyl alcohol, polyvinylacetal and the like. These film forming resins may or may not contain a reactive group. Examples of the reactive group include a methacryloyl group, an acryloyl group, a vinyl group, an amino group, a mercapto group, an epoxy group, a carboxyl group, a phenol group, a hydroxyl group and the like.

Furthermore, the embossed layer 2A, shown in Fig. 1, may contain: filling agent such as silicone compounds, reactive monomers, reactive oligomers, pigments, fillers; photopolymerization initiators; polymerization inhibitors; colorants; surfactants and the like.

Examples of the reactive monomer include methyl methacrylate, methyl acrylate, ethyl methacrylate, ethyl acrylate, propyl methacrylate, propyl acrylate, butyl methacrylate, butyl acrylate, ethylhexyl methacrylate, ethylhexyl acrylate, stearyl methacrylate, stearyl acrylate, lauryl methacrylate, lauryl acrylate, tridecyl methacrylate, tridecyl acrylate, trimethylolpropane triacrylate, trisacryloxyethyl isocyanurate, tris-isocyanurate, pentaerythritol tetraacrylate, dipentaerythritol hexaacrylate and the like.

Examples of the reactive oligomer include epoxy acrylate, urethane acrylate, polyester acrylate, polyether acrylate and the like.

Examples of the photopolymerization initiator include benzoin ethyl ether, acetophenone, diethoxy acetophenone, benzyl dimethylketal, 2-hydroxy-2-methylpropiophenone, 2-methyl-1-[4-(methylthio)phenyl]-2-morpholinopropane-1, 1-hydroxycyclohexyl phenyl ketone, benzophenone, p-chlorobenzophenone, Michler's ketone, isoamyl N,N-dimethylaminobenzoate, 2-chlorothioxanthone, 2,4-diethylthioxanthone and the like.

In production of the embossed release sheet according to the first modified example of the first embodiment, a film forming resin, a silicone compound and the like are added when the isocyanate compound and the methacrylic compound or the acrylic compound react with each other in a solvent. The film forming resin content in the curable resin ink is 70 mass% or less, preferably 1 mass% to 70 mass%, more preferably 20 mass% to 60 mass%. When the film forming resin content in the curable resin ink is larger than 70 mass%, heat resistance of the embossed layer 2A to be formed may be insufficient. By adding the film forming resin such as methacrylic resin to the curable resin ink, film forming properties of the plastic layer 102A to be formed, adhesion to the support sheet 1A and the like are improved. Note that, by using methacrylic resin of which glass transition temperature (Tg) is 40°C or higher, preferably 50°C or higher, embossability of the plastic layer 102A to be formed is improved. Moreover, besides a normal methacrylic compound, maleic anhydride, methacrylic acid, styrene, hydroxyethyl methacrylate, maleimide group-containing methacrylate, isobornyl group-containing methacrylate and the like may be added as copolymerization components. Moreover, the silicone compound is moved to the surface when the plastic layer 102A is formed.

### (Second Modified Example of First Embodiment)

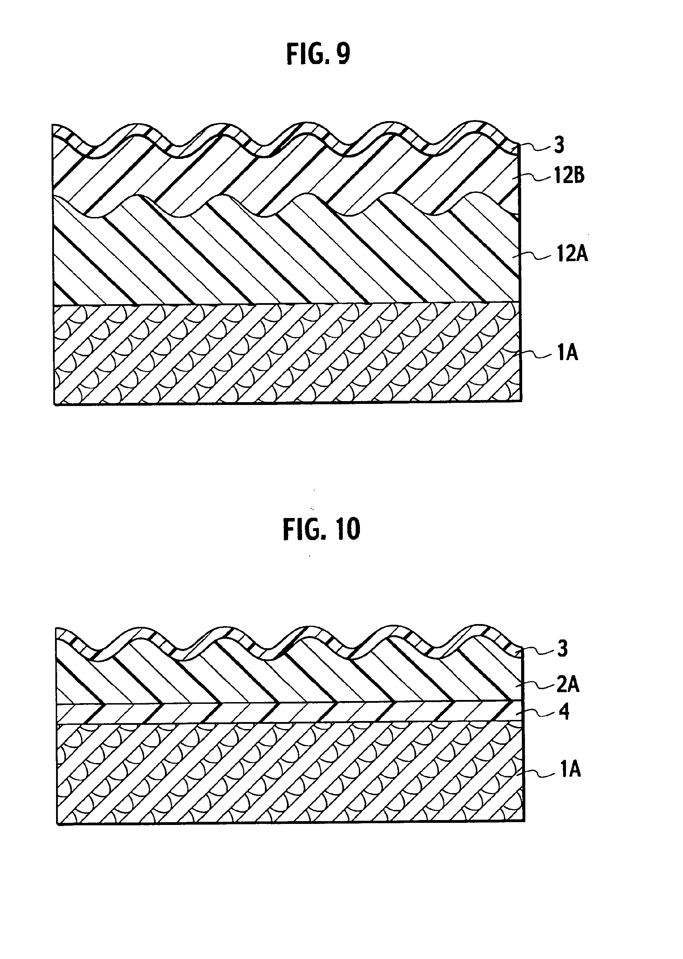

As shown in Fig. 9, an embossed release sheet according to a second modified example includes two embossed layers 12A and 12B, which are disposed on a support sheet 1A. The embossed layers 12A and 12B and a release layer 3 are embossed for transferring an embossed pattern of leather of an animal or the like. Since the embossed release sheet according to the second modified example includes the two embossed layers 12A and 12B, occurrence of pin holes or the like, which penetrate the embossed release sheet, can be prevented. Note that the embossed release sheet may include more embossed layers.

### (Second Embodiment)

As shown in Fig. 10, an embossed release sheet according to a second embodiment includes a sealing layer 4 which is disposed between a support sheet 1A and an embossed layer 2A and contains a film forming resin. Examples of the film forming resin contained in the sealing layer 4 disposed on a surface of the support sheet 1A include polyvinyl alcohol, acrylic resin, styrene acrylic resin, cellulose derivative, polyester resin, polyurethane resin, melamine resin, alkyd resin, amino alkyd resin, polyvinyl chloride resin, polyvinylidene chloride resin, mixtures thereof and the like. Furthermore, the sealing layer 4 may contain inorganic pigments such as talc, kaolin, silica, calcium carbonate, barium sulfate, titanium oxide and zinc oxide. A mass of the sealing layer 4 is, for example, 0.5 g/m² to 20 g/m². Since other constituent components of the embossed release sheet, shown in Fig. 10, are the same as those of the embossed release sheet according to the first embodiment shown in Fig. 1, description thereof will be omitted.

Since the embossed release sheet according to the second embodiment includes the sealing layer 4 containing the film forming resin, substances contained in the embossed layer 2A can be prevented from penetrating into the support sheet 1A. Moreover, the sealing layer 4 can also improve adhesion between the support sheet 1A and the embossed layer 2A. Furthermore, the sealing layer 4 can also improve smoothness. Moreover, if the sealing layer 4 contains the inorganic pigments, the sealing effect is further increased.

In production of the embossed release sheet shown in Fig. 10, the inorganic pigments are mixed by 0.5 mass% to 70 mass% into the film forming resin to prepare an ink for a sealing layer. Note that, if the proportion of the inorganic pigments is too high, embossability is deteriorated. Next, the ink for a sealing layer is coated on the support sheet 1 A. A coating method of the ink for a sealing layer is the same as that of the curable resin ink. After the ink for a sealing layer is coated to form the sealing layer 4 on the support sheet 1A, a plastic layer 102A is formed on the sealing layer 4. Since other production processes of the embossed release sheet, shown in Fig. 10, are the same as those of the embossed release sheet according to the first embodiment shown in Fig. 1, description thereof will be omitted.

### (Third Embodiment)

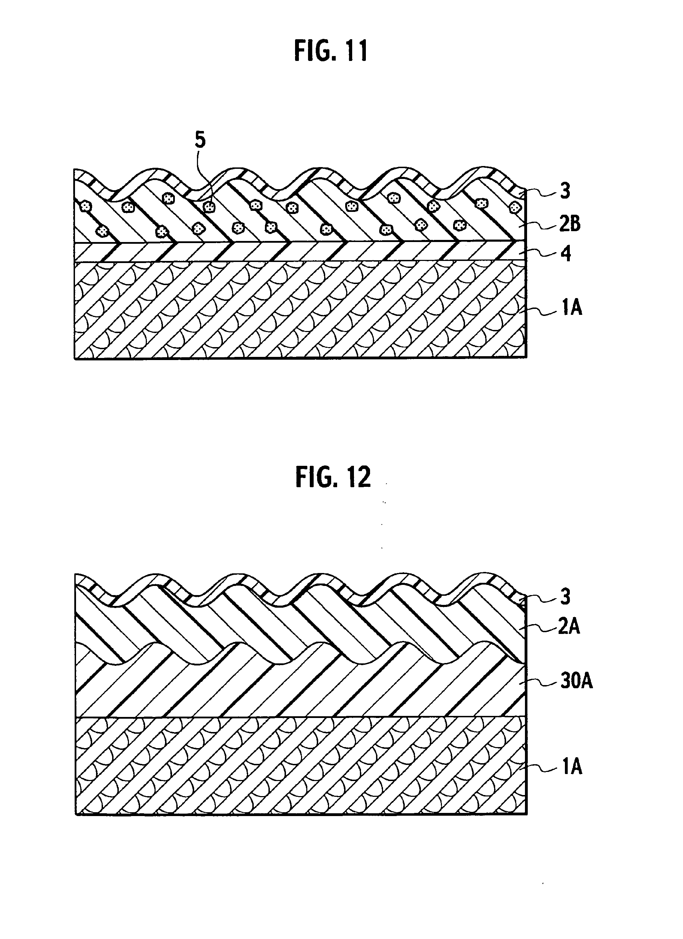

As shown in Fig. 11, an embossed release sheet according to a third embodiment includes: a sealing layer 4 containing a film forming resin; an embossed layer 2B which is disposed on a surface of the sealing layer 4 and contains inorganic pigments 5; and a release layer 3 disposed on a surface of the embossed layer 2B. The embossed layer 2B and the release layer 3 are embossed for transferring an embossed pattern of leather of an animal or the like. Examples of the inorganic pigments 5 contained in the embossed layer 2B include talc, kaolin, silica, calcium carbonate, barium sulfate, titanium oxide, zinc oxide and the like. The inorganic pigments 5 contained in the embossed layer 2B make it possible to give a matte design to a synthetic leather to be produced by using the embossed release sheet. Since other constituent components of the embossed release sheet, shown in Fig. 11, are the same as those of the embossed release sheet according to the first embodiment shown in Fig. 1, description thereof will be omitted.

In production of the embossed release sheet shown in Fig. 11, the inorganic pigments 5 are added when an isocyanate compound and a methacrylic compound or an acrylic compound react with each other in a solvent. The content of the inorganic pigments 5 in the curable resin ink is 0.5 mass% to 50 mass%, preferably 1 mass% to 10 mass%. Since other production processes of the embossed release sheet, shown in Fig. 11, are the same as those of the embossed release sheet according to the first embodiment shown in Fig. 1, description thereof will be omitted.

### (Fourth Embodiment)

As shown in Fig. 12, an embossed release sheet according to a fourth embodiment includes: a support sheet 1A; an intermediate layer 30A which is disposed on a surface of the support sheet 1A and contains a thermoplastic resin that is not cured by ionizing radiation or ultraviolet radiation; an embossed layer 2A which is disposed on the intermediate layer 30A and contains a resin cured by ionizing radiation or ultraviolet radiation; and a release layer 3 which is disposed on a surface of the embossed layer 2A and contains addition-polymerized silicone. The intermediate layer 30A, the embossed layer 2A and the release layer 3 are embossed.

Examples of the thermoplastic resin contained in the intermediate layer 30A include acrylic resin, polyolefin resin such as polyethylene, polypropylene and polymethylpentene, silicone resin, alkyd resin containing amino alkyd, and the like.

For example, in the case where a synthetic leather containing polyurethane resin is produced by using the embossed release sheet, the intermediate layer 30A may contain polypropylene resin excellent in heat resistance. Moreover, the intermediate layer 30A may also contain a copolymer consisting of propylene that is a main component, ethylene, butene, pentene, hexane, octene and α-olefin such as 4-polymethylpentene-1.

For example, in the case where a synthetic leather containing polyvinyl chloride resin and the like is produced through a heat treatment process at 180°C to 210°C by using the embossed release sheet, the intermediate layer 30A may contain polymethylpentene resin having a high melting point. Examples of the polymethylpentene resin include 4-methyl-1-pentene and the like. Moreover, the examples of the polymethylpentene resin also include a copolymer consisting of 4-methyl-1-pentene that is a main component, ethylene, propylene, 1-butene, 1-hexane, 1-octene, 1-decene, 1-tetradecene and □-olefin having a carbon number of 2 to 20 such as 1-octadecene.

The surface of the intermediate layer 30A may be subjected to surface treatment for improving adhesion to the embossed layer 2A. Examples of the surface treatment include frame processing, corona discharge treatment, ozonation treatment, low-temperature plasma treatment using oxygen gas, nitrogen gas or the like, atmospheric-pressure plasma treatment, glow discharge treatment, oxidation treatment using chemicals, and the like. Since other constituent components of the embossed release sheet, shown in Fig. 12, are the same as those of the embossed release sheet according to the first embodiment shown in Fig. 1, description thereof will be omitted.

A thickness of the intermediate layer 30A is, for example, 3 µm to 40 µm, preferably 5 µm to 20 µm. If the thickness of the intermediate layer 30A is smaller than 3 µm, releasability of the embossed release sheet may be lowered. Meanwhile, if the thickness of the intermediate layer 30A is larger than 40 µm, the embossed release sheet may be curled in its width direction.

Moreover, a sum of thicknesses of the intermediate layer 30A and the embossed layer 2A is, for example, 6 µm to 80 µm, preferably 10 µm to 40 µm. In the case where a synthetic leather is produced by using the embossed release sheet according to the fourth embodiment, the embossed release sheet is exposed to a high temperature. Moreover, a material of the synthetic leather contains a plasticizer. Thus, if the sum of the thicknesses is smaller than 6 µm, the intermediate layer 30A may be released from the support sheet 1A. Meanwhile, if the sum of the thicknesses is larger than 80 µm, the embossed release sheet may be curled in its width direction.

Since the embossed release sheet according to the fourth embodiment includes the intermediate layer 30A, the thickness thereof can be increased. Moreover, since the intermediate layer 30A contains the thermoplastic resin such as polyolefin resin, excellent shaping properties are achieved. Thus, a deeply embossed pattern with excellent contrast can be formed on the synthetic leather produced by using the embossed release sheet according to the fourth embodiment. Moreover, the thermoplastic resin that is not cured by ionizing radiation or ultraviolet radiation is cheaper than the ionizing radiation or ultraviolet curable resin. Thus, the thickness can be increased at lower cost than that required to increase the thickness of the embossed layer 2A made of the ionizing radiation or ultraviolet curable resin. Moreover, adhesive strength between the support sheet 1A and the embossed layer 2A is increased by the intermediate layer 30A including thermoplastic resin.

Moreover, by disposing the intermediate layer 30A on the support sheet 1A, it is no longer required to dispose a sealing layer containing silica and the like on the support sheet 1A. When the sealing layer containing silica and the like is disposed on the support sheet 1A, the surface becomes matte, which is not suitable for manufacturing a glossy synthetic leather. Meanwhile, when the intermediate layer 30A is disposed thereon, the substances contained in the embossed layer 2A can be prevented from penetrating into the support sheet 1A. At the same time, manufacturing the glossy synthetic leather can also be realized. Moreover, on the intermediate layer 30A containing the thermoplastic resin, the embossed layer 2A containing the resin cured by ionizing radiation or ultraviolet radiation is disposed. Thus, excellent heat resistance is achieved and no embossing deformation occurs even if the embossed release sheet is used for manufacturing the synthetic leather made of polyvinyl chloride. Furthermore, since the release layer 3 containing the addition-polymerized silicone is disposed on the top surface, excellent releasability is realized against even a highly reactive adhesive such as a two-component polyurethane adhesive.

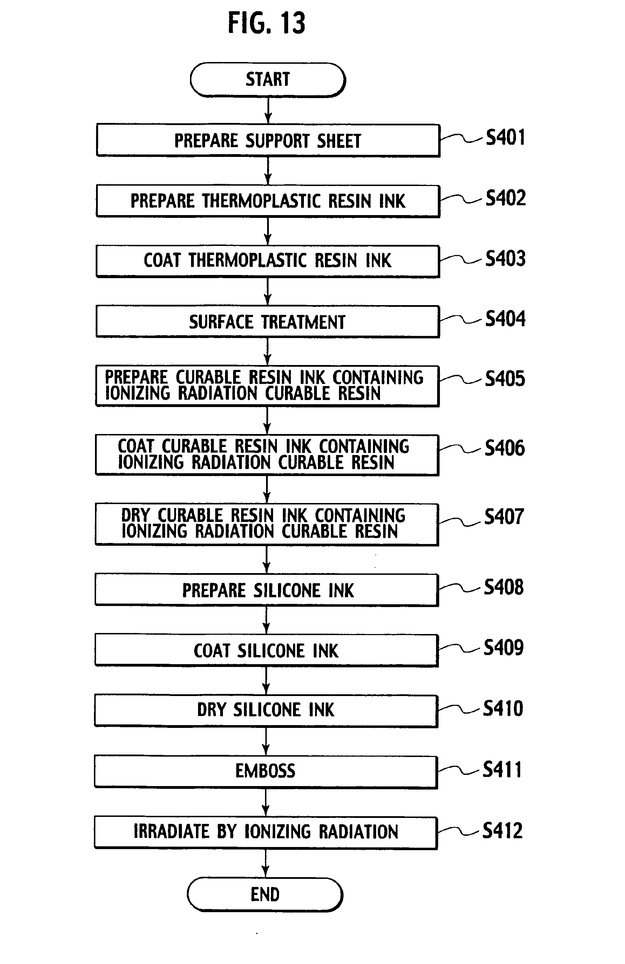

Next, with reference to a flowchart shown in Fig. 13, description will be given of a method for manufacturing an embossed release sheet according to the fourth embodiment.

(a) First, in the same manner as Step S101 shown in Fig. 2, Step S401 shown in Fig. 13 is executed. In Step S402, a thermoplastic resin ink is prepared, which contains a copolymer consisting mainly of 4-methyl-1-pentene as a thermoplastic resin. Specifically, the copolymer contains 97 mass% to 98 mass% of 4-methyl-1-pentene and 2 mass% to 3 mass% of α-olefin. In order to improve heat resistance of an intermediate layer 30A to be formed, a melting point of the thermoplastic resin, which is measured by differential scanning calorimetry (DSC), is set to, for example, 236°C to 238°C. Moreover, a MFR (Melt Flow Rate) measured at 260°C with a load of 2.16 kg according to ASTM (American Society for Testing and Materials) D1238 standards is, for example, 160 g/10 minutes to 200 g/10 minutes.

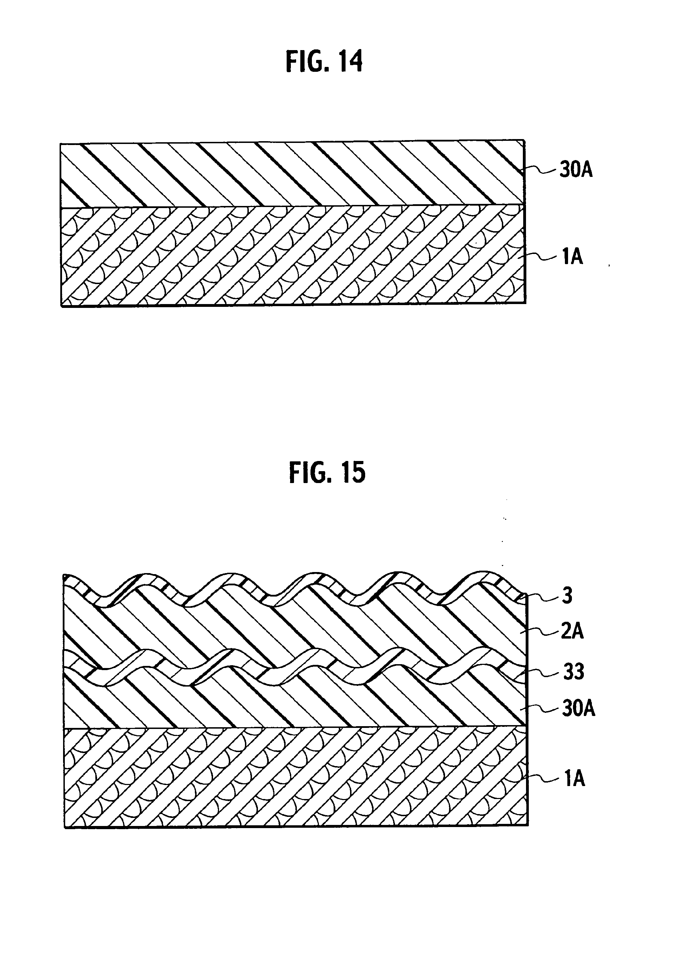

(b) In Step S403, the thermoplastic resin ink is coated on the support sheet 1A by roll coating, gravure coating, extrusion coating, knife coating, mere bar coating, dip coating or the like. Thus, as shown in Fig. 14, the intermediate layer 30A is formed on the support sheet 1A. In Step S404, a surface of the intermediate layer 30A is subjected to in-line plasma treatment, thereby removing moisture, dust and the like on the surface of the intermediate layer 30A and smoothening and activating the surface of the intermediate layer 30A. In the plasma treatment, a plasma output, a kind of plasma gas, a feed amount of the plasma gas and treatment time are set. Examples of the plasma gas include inorganic gases such as oxygen gas, nitrogen gas, argon gas and helium gas. For the plasma treatment, for example, a direct-current glow discharge apparatus, a high-frequency discharge apparatus, a microwave discharge apparatus and the like can be used.

(c) In the same manner as Step S102 shown in Fig. 2, a curable resin ink is prepared in Step S405 shown in Fig. 13. In Step S406, the curable resin ink is coated on the surface of the intermediate layer 30A. In Step S407, a solvent contained in the curable resin ink is dried to form a plastic layer 102A on the surface of the intermediate layer 30A. Thereafter, in the same manner as Steps S105 to S109 shown in Fig. 2, Steps S408 to S412 are carried out to obtain the embossed release sheet according to the fourth embodiment.

According to the method for manufacturing an embossed release sheet according to the fourth embodiment, since the intermediate layer 30A containing the thermoplastic resin is disposed below the plastic layer 102A, embossability in Step S411 is further improved.

### (Modified Example of Fourth Embodiment)

As shown in Fig. 15, an embossed release sheet according to a modified example of the fourth embodiment includes: a support sheet 1A; an intermediate layer 30A which is disposed on a surface of the support sheet 1A and contains a thermoplastic resin; an adhesive layer 33 disposed on the intermediate layer 30A; an embossed layer 2A which is disposed on the adhesive layer 33 and contains a resin cured by ionizing radiation or ultraviolet radiation; and a release layer 3 which is disposed on a surface of the embossed layer 2A and contains addition-polymerized silicone. The intermediate layer 30A, the adhesive layer 33, the embossed layer 2A and the release layer 3 are embossed.

The adhesive layer 33 contains, for example, a primer coat, an undercoat, an anchor coat, an adhesive, an evaporated anchor coat or the like. Examples of the coat include resin compositions and the like containing the following resins as a main component of a vehicle: polyester resin, polyamide resin, polyurethane resin, epoxy resin, phenolic resin, methacrylic resin, acrylic resin, polyvinyl acetate resin, polyolefin resin such as polyethylene and polypropylene, copolymers or modified resin thereof, cellulosic resin, and the like.

Since the intermediate layer 30A and the embossed layer 2A are attached to each other with the adhesive layer 33 interposed therebetween, durability of the embossed release sheet according to the modified example of the fourth embodiment is further increased.

### (Fifth Embodiment)

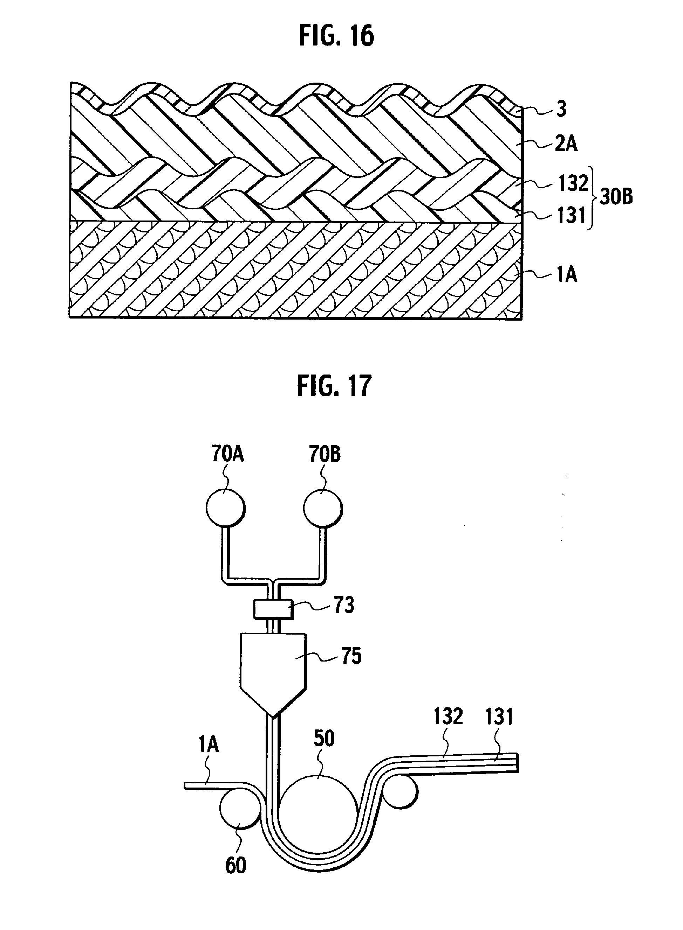

As shown in Fig. 16, an intermediate layer 30B of an embossed release sheet according to a fifth embodiment includes a first layer 131 and a second layer 132. The first layer 131 contains a composition of, for example, polypropylene resin, polymethylpentene resin and polyethylene resin. The second layer 132 contains, for example, polypropylene resin and polymethylpentene resin.

Examples of the polyethylene resin include low-density polyethylene, medium-density polyethylene, high-density polyethylene and the like. A melting point of the polyethylene resin used is 90 to 130°C, preferably 110 to 120°C. An amount of the polyethylene resin blended is, for example, 5 mass% to 80 mass%, preferably 10 mass% to 50 mass%. Although the melting point of polyethylene is lower than those of the polypropylene resin and the polymethylpentene resin, adhesion between the support sheet 1A and the second layer 132 can be improved as long as the amount of the polyethylene resin is within the range of 5 mass% to 80 mass%. Note that the second layer 132 may be subjected to surface treatment. Moreover, the intermediate layer 30B may include more layers. Since other constituent components of the embossed release sheet, shown in Fig. 16, are the same as those of the embossed release sheet according to the first embodiment shown in Fig. 1, description thereof will be omitted.

Next, description will be given of a laminator used for manufacturing the embossed release sheet according to the fifth embodiment. As shown in Fig. 17, the laminator includes: a first extruder 70A which extrudes a molten resin; and a second extruder 70B which extrudes a molten resin. The molten resins extruded from the first and second extruders 70A and 70B, respectively, reach a flat die (T-die) 75 through an adapter 73. The molten resins extruded from the first and second extruders 70A and 70B, respectively, are molded into a two-layer sheet by the flat die 75. Below the flat die 75, a back-up roll 60 and a cooling roll 50 are disposed. The extruded resins and the support sheet 1A are laminated by the back-up roll 60 and the cooling roll 50.

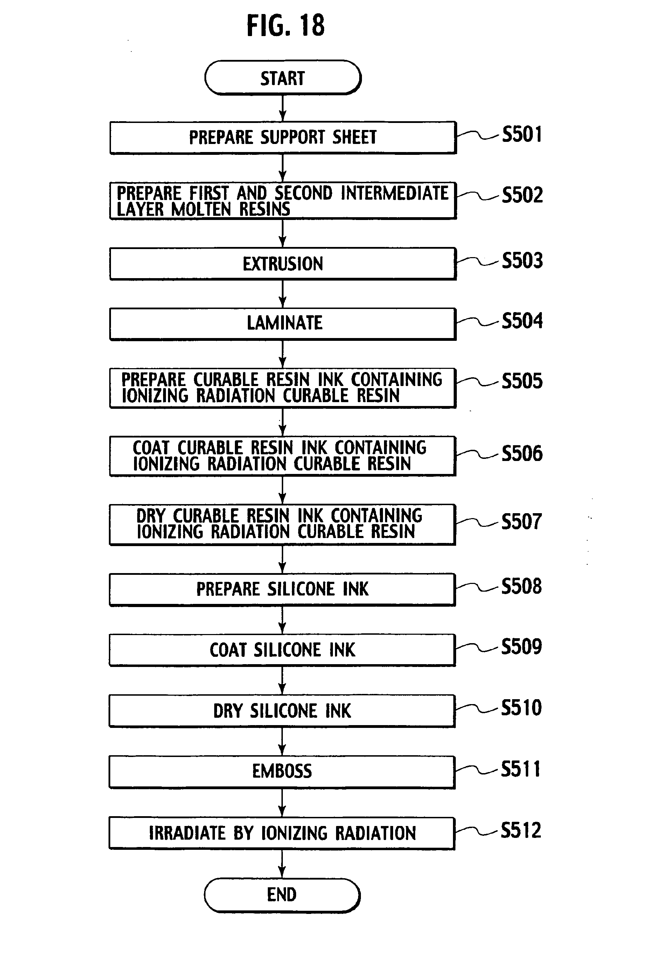

Next, with reference to a flowchart shown in Fig. 18, description will be given of a method for manufacturing an embossed release sheet according to the fifth embodiment.

(a) First, in the same manner as Step S401 shown in Fig. 13, Step S501 shown in Fig. 18 is executed. In Step S502, a first intermediate layer molten resin containing a composition of, for example, polypropylene resin, polymethylpentene resin and polyethylene resin and a second intermediate layer molten resin containing, for example, polypropylene resin and polymethylpentene resin are prepared.

(b) In Step S502, the first extruder 70A, shown in Fig. 17, is filled with the first intermediate layer molten resin and the second extruder 70B is filled with the second intermediate layer molten resin. Thereafter, the first and second extruders 70A and 70B are heated according to melting points of the resins contained in the first and second intermediate layer molten resins, MFRs thereof, matting agents, amounts of the resins and matting agents blended, and the like. Subsequently, the first and second intermediate layer molten resins are extruded to the flat die 75 through the adapter 73, and the first and second intermediate layer molten resins molded into layers are extruded together from the flat die 75.

(c) In Step S503, the support sheet 1A and the first and second intermediate layer molten resins molded into layers are laminated by the back-up roll 60 and the cooling roll 50 to form first and second layers 131 and 132 on the support sheet 1A. Thereafter, in the same manner as Steps S405 to S412 shown in Fig. 13, Steps S505 to S512, shown in Fig. 18, are carried out to obtain the embossed release sheet according to the fifth embodiment.

### (Sixth Embodiment)

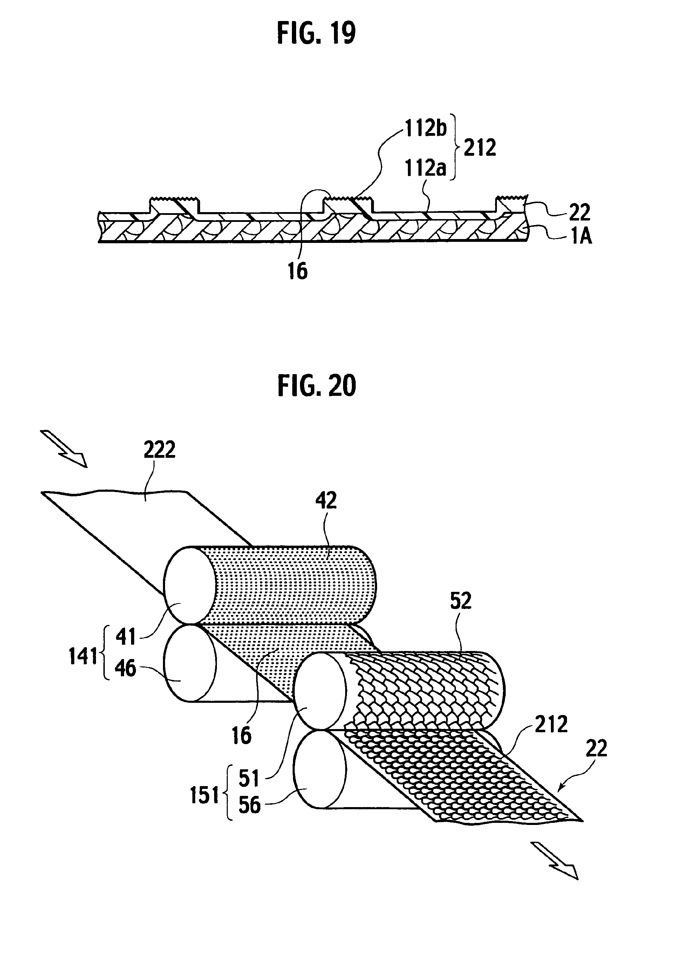

As shown in Fig. 19, an embossed release sheet according to a sixth embodiment includes a support sheet 1A and an embossed layer 22 which is disposed on the support sheet 1A and contains a resin such as polypropylene. On the embossed layer 22, an emboss 212 having concave portions 112a and convex portions 112b is provided. An upper surface of each of the convex portions 112b is rougher than a bottom surface of each of the concave portions 112a. On the upper surface of the convex portion 112b, a rough surface pattern 16 is provided. An arithmetic mean surface roughness (Ra) of the rough surface pattern 16 is 0.8 µm to 4.0 µm. The bottom surface of each of the concave portions 112a is flat, for example.

Next, description will be given of an apparatus for manufacturing the embossed release sheet according to the sixth embodiment. The embossed release sheet production apparatus, shown in Fig. 20, includes: a roughening device 141 which roughens a surface of a plastic layer 222; and a marking device 151 which provides concave portions, of which bottom surfaces are flatter than their surfaces, in the roughened plastic layer 222.

The roughening device 141 includes: a first embossing roll 41 having a first print pattern 42 provided thereon; and a first back-up roll 46 which is disposed so as to face the first embossing roll 41 and sandwiches the support sheet 1A and the plastic layer 222 on the support sheet 1A with the first embossing roll 41. The support sheet 1A having the plastic layer 222 coated thereon is fed to the first embossing roll 41 by an original sheet feeder, for example.

The marking device 151 includes: a second embossing roll 51 having a second print pattern 52 provided thereon, the second print pattern 52 having concaves and convexes larger than those in the first print pattern 42 provided on the first embossing roll 41; and a second back-up roll 56 which is disposed so as to face the second embossing roll 51 and sandwiches the support sheet 1A and the plastic layer 222 on the support sheet 1A with the second embossing roll 51. The second embossing roll 51 and the second back-up roll 56 are arranged on the downstream side of the first embossing roll 41 and the first back-up roll 46 in a conveying direction of the embossed release sheet. The embossed release sheet including the support sheet 1A and the embossed layer 22 embossed by the second embossing roll 51 is rolled up and recovered by a recovery device, for example.

The first print pattern 42 provided on the first embossing roll 41 is, for example, a rough surface pattern such as a sound blast pattern. The second print pattern 52 provided on the second embossing roll 51 corresponds to an embossed pattern of leather of an animal or the like.

Next, description will be given of a method for manufacturing an embossed release sheet according to the sixth embodiment.

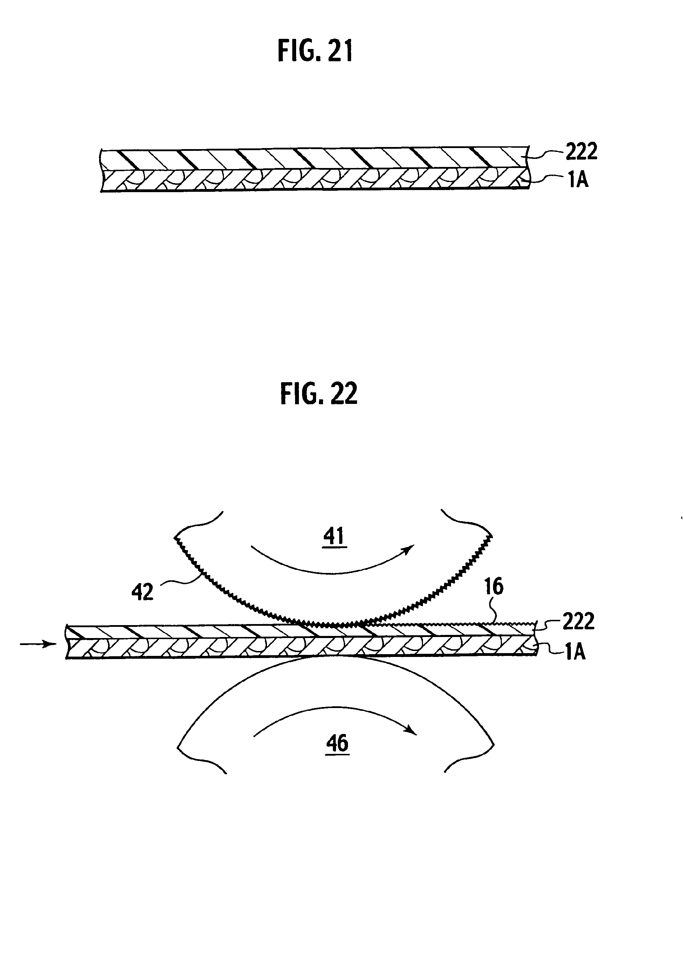

(a) As shown in Fig. 21, a resin such as polypropylene is coated on a support sheet 1A to form a plastic layer 222 on the support sheet 1A. Thus, an original sheet of an embossed release sheet according to the sixth embodiment is obtained. Thereafter, relative positions of the first embossing roll 41 and the first back-up roll 46, shown in Fig. 20, and relative positions of the second embossing roll 51 and the second back-up roll 56, shown in Fig. 20, are adjusted so as to enable the original sheet of the embossed release sheet to be sandwiched with an appropriate pressure between the first embossing roll 41 and the first back-up roll 46 and between the second embossing roll 51 and the second back-up roll 56, respectively. Subsequently, the original sheet of the embossed release sheet is fed from the original sheet feeder.

(b) The original sheet of the embossed release sheet fed from the original sheet feeder is first fed between the first embossing roll 41 and the first back-up roll 46. As shown in Fig. 22, the original sheet of the embossed release sheet is sandwiched between the first embossing roll 41 and the first back-up roll 46. Note that the plastic layer 222 on the support sheet 1A faces the first embossing roll 41 and the support sheet 1A faces the first back-up roll 46. Therefore, the rough surface pattern 16 corresponding to the first print pattern 42 on the first embossing roll 41 is formed on the entire surface of the plastic layer 222.

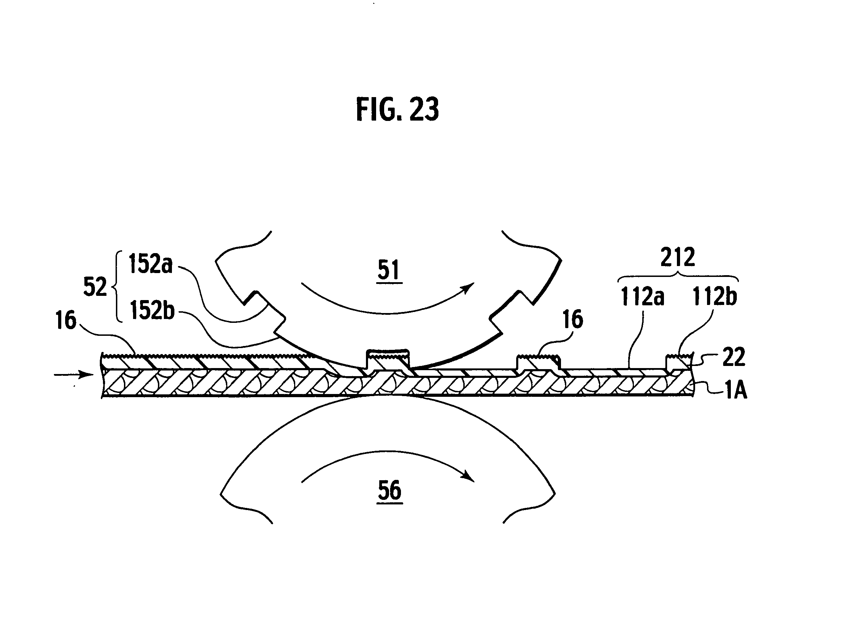

(c) Thereafter, the original sheet of the embossed release sheet is fed between the second embossing roll 51 and the second back-up roll 56. As shown in Fig. 23, the original sheet of the embossed release sheet is sandwiched between the second embossing roll 51 and the second back-up roll 56. Note that the plastic layer 222 having the roughened surface faces the second embossing roll 51 and the support sheet 1A faces the second back-up roll 56. Therefore, the emboss 212 having the concave portions 112a and the convex portions 112b corresponding to the second print pattern 52 on the second embossing roll 51 is provided on the surface of the plastic layer 222 by plastic deformation. Thus, the embossed layer 22 is formed on the support sheet 1A. Since the support sheet 1A is provided below the plastic layer 222, the emboss 212 is properly provided. Note that the concaves and convexes in the emboss 212 are larger than those in the rough surface pattern 16.

(d) When the concave portions 112a in the emboss 212 are formed on the embossed layer 22, smooth upper surfaces of convex portions 152b in the second print pattern 52 on the second embossing roll 51 are pressed against the roughened plastic layer 222 with a large pressure. Therefore, the minute rough surface pattern 16 on the surface of the plastic layer 222 is pressed by the convex portions 152b on the second embossing roll 51 and thus smoothened. Consequently, the bottom surfaces of the concave portions 112a on the embossed layer 22 are flattened.

(e) When the convex portions 112b in the emboss 212 are formed on the embossed layer 22, concave portions 152a in the second print pattern 52 on the second embossing roll 51 face the plastic layer 222. In this event, the second embossing roll 51 does not come into contact with the plastic layer 222 or, even if the embossing roll and the layer come into contact, a contact pressure is weak. Thus, the rough surface pattern 16 remains on the surfaces of the convex portions 112b in the emboss 212 provided on the embossed layer 22. Subsequently, the embossed release sheet thus formed is recovered and the method for manufacturing an embossed release sheet according to the sixth embodiment is terminated.

According to the method for manufacturing an embossed release sheet according to the sixth embodiment described above, the minute rough surface pattern 16 is first provided on the entire surface of the plastic layer 222. Thereafter, the emboss 212 that is a mirror image of the embossed pattern of leather of an animal or the like is provided on the plastic layer 222. Moreover, in formation of the concave portions 112a in the emboss 212, a large pressure is applied to the plastic layer 222 by the second embossing roll 51. On the other hand, in formation of the convex portions 112b in the emboss 212, no large pressure is applied to the plastic layer 222 by the second embossing roll 51. Thus, it is possible to flatten the bottom surfaces of the concave portions 112a in the emboss 212 on the embossed layer 22 to be formed and to leave the minute rough surface pattern 16 on the upper surfaces of the convex portions 112b in the emboss 212. Note that, for example, a depth of each of the concave portions 152a in the second print pattern 52 on the second embossing roll 51 may be set larger than a design height of each of the convex portions 112b in the emboss 212 provided on the embossed layer 22.

Although the description was given of the case where the rough surface pattern 16 is formed on the entire surface of the plastic layer 222 by the first embossing roll 41, the rough surface pattern 16 may be formed only in a part where the emboss 212 is provided on the embossed layer 22. Alternatively, the rough surface pattern 16 may also be formed only in a part where the convex portions 112b of the emboss 212 are provided. Note, however, that, even if the rough surface pattern 16 is formed on the entire surface of the plastic layer 222, the bottom surfaces of the concave portions 112a in the emboss 212 provided on the embossed layer 22 are flattened since the convex portions 152b in the second print pattern 52 on the second embossing roll 51 are pressed against the bottom surfaces. Therefore, the formation of the rough surface pattern 16 on the entire surface of the plastic layer 222 by using the first embossing roll 41 eliminates the need for strict positioning between the first embossing roll 41 and the second embossing roll 51. Thus, the embossed release sheet can be more efficiently produced.

Next, description will be given of a method for manufacturing a synthetic leather according to the sixth embodiment.

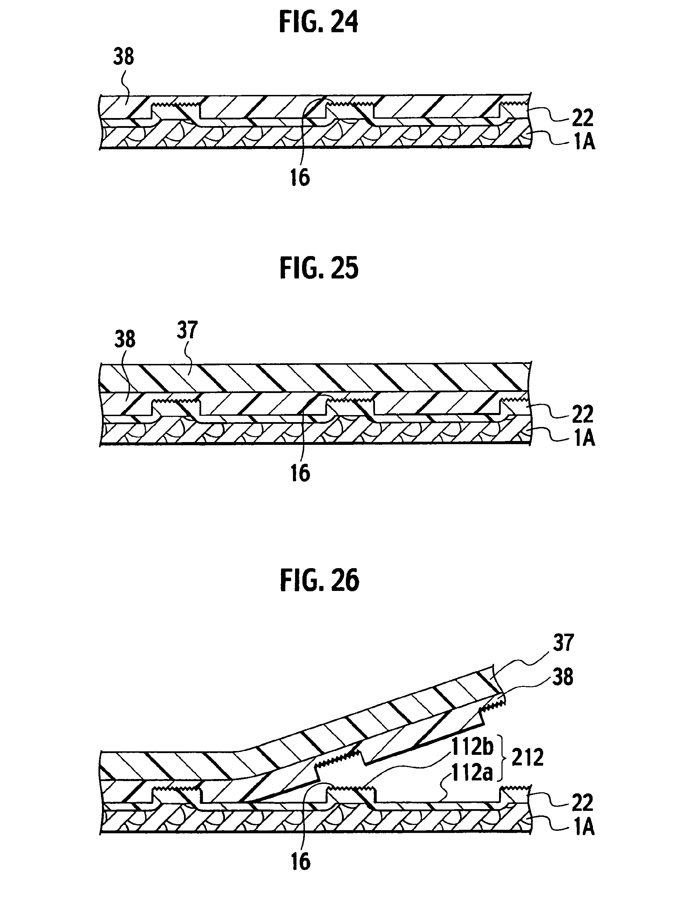

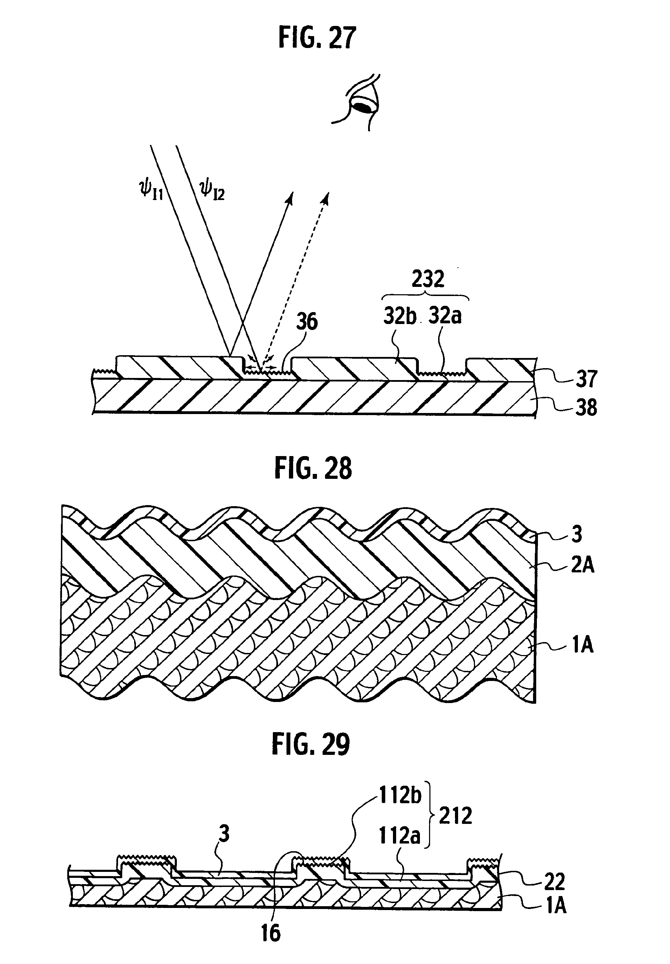

As shown in Fig. 24, a coating compound consisting of, for example, a thermosetting resin and a molten resin containing a colorant and the like is coated on the embossed layer 22 in the embossed release sheet. Thus, a surface film 38 is formed on the embossed layer 22. Next, as shown in Fig. 25, an inner sheet 37 such as a base is attached to the surface film 38. Thereafter, the thermosetting resin contained in the surface film 38 is cured. Finally, as shown in Fig. 26, the surface film 38 is released from the embossed layer 22. Thus, as shown in Fig. 27, a synthetic leather including the inner sheet 37 and the surface film 38 disposed on the inner sheet 37 is obtained. Note that the embossed release sheet can be repeatedly used and makes it possible to produce a plurality of synthetic leathers with improved design.

Since the emboss 212 provided on the embossed layer 22 in the embossed release sheet is transferred, an emboss 232 having concave portions 32a and convex portions 32b is provided on the surface film 37 of the synthetic leather thus obtained. Here, the rough surface pattern 16 is transferred onto bottom surfaces of the concave portions 32a. Thus, a minute and matte rough surface pattern 36 is formed. On the other hand, the convex portions 32b pressed by the concave portions 112a having flat bottom surfaces have flat upper surfaces. Therefore, on the surface of the surface film 37, reflectance on the convex portion 32b is high and gloss is increased. Thus, light ϕ_{I1} made incident on the convex portion 32b is regularly reflected. Meanwhile, light ϕ_{I2} made incident on the bottom surface of the concave portion 32a is diffusely reflected. Thus, an amount of reflected light of the light ϕ_{I2} in a regular reflection direction is reduced. As a result, contrast between the upper surface of the convex portion 32b and the bottom surface of the concave portion 32a is increased. Consequently, the method for manufacturing a synthetic leather according to the sixth embodiment enables manufacturing a synthetic leather having excellent gloss on the convex portion 32b and having high contrast between the upper surface of the convex portion 32b and the bottom surface of the concave portion 32a. In a conventional synthetic leather, a bottom surface of a concave portion is also flat. Consequently, the conventional synthetic leather has low contrast between the bottom surface of the concave portion and an upper surface of a convex portion and thus looks flat as a whole.

Note that, by increasing a depth of the concave portion 32a on the surface film 37, the contrast can be increased even if the bottom surface of the concave portion 32a is flattened. However, emboss transferring with high pressure is required to increase the depth of the concave portion 32a. Meanwhile, by providing the rough surface pattern 36 on the bottom surface of the concave portion 32a, the contrast is increased even if the concave portion 32a is not deep. Thus, the pressure applied to emboss the embossed release sheet and the pressure applied to emboss the synthetic leather can be reduced. As a result, damage on the embossed release sheet and the synthetic leather is reduced. Moreover, cost required for production and maintenance of the embossed release sheet production apparatus can also be reduced.

### (Other Embodiments)

As described above, the contents of the present invention have been disclosed through one embodiment of the present invention. However, it should be understood that the present invention is not limited to the description and drawings which constitute a part of this disclosure. From this disclosure, various alternative embodiments, embodiments and operational technologies will become apparent to those skilled in the art. For example, in the silicone ink, alkenyl group-containing organopolysiloxane, organohydrogen polysiloxane and platinum curing catalyst react at room temperature. Thus, releasability of the release layer 3 to be formed may be lowered. Therefore, a reaction inhibitor, such as a silylated acetylene alcohol, which suppresses the platinum curing catalyst in a solvent at room temperature and does not suppress the platinum curing catalyst subjected to heat treatment, may be added to the silicone ink. In this case, five mass parts to 100 mass parts of the reaction inhibitor is added to 100 mass parts of alkenyl group-containing organopolysiloxane, organohydrogen polysiloxane and the platinum curing catalyst in total. Moreover, as shown in Fig. 28, the support sheet 1A may also be embossed for transferring an embossed pattern of leather of an animal or the like. Alternatively, as shown in Fig. 29, a protective film 3 containing addition-polymerized silicone may be disposed on the embossed layer 22 and a surface of the protective film 3 on the convex portion 112b of the emboss may be made rougher than that on the concave portion 112a of the emboss. Moreover, in the above embodiments, manufacturing the synthetic leather has been described as the intended use of the embossed release sheet. However, the embossed release sheet can also be used for manufacturing design sheets such as wallpapers. As described above, it should be understood that the present invention includes various embodiments and the like which are not herein described. Therefore, the present invention is limited only by the items specific to the invention according to the scope of claims appropriate based on this disclosure.

### (Examples)

Synthesis of ionizing radiation or ultraviolet curable resin (A):
206.1 g of ethyl acetate and 133.5 g of isophorone diisocyanate trimer (VESTANAT T1890, manufactured by degussa Corp.) are charged in a reactor equipped with a stirrer, a reflux condenser, a dropping funnel and a thermometer, and the temperature is raised to 80°C for dissolution. After air is introduced into the solution, 0.38 g of hydroquinone monomethyl ether, 249.3 g of a mixture of pentaerythritol triacrylate and pentaerythritol tetraacrylate (Viscoat 300, produced by Osaka Organic Chemical Industry Co., Ltd.) and 0.38 g of dibutyltin dilaurate are charged therein. After conducting the reaction at 80°C for 5 hours,
688.9 g of ethyl acetate is added thereto and the reaction mixture is cooled to obtain a reaction product solution. As a result of infrared absorption spectrum analysis of the reaction product solution obtained, disappearance of absorption of an isocyanate group is confirmed. A product obtained by distilling ethyl acetate away from the reaction product solution has a softening temperature of 43°C.

Synthesis of ionizing radiation or ultraviolet curable resin (B):
256.67 g of methyl ethyl ketone and 110 g of isophorone diisocyanate trimer are charged into a reactor equipped with a stirrer, a reflux condenser, a dropping funnel and a thermometer, and the temperature is raised to 80°C for dissolution. After air is introduced into the solution, 0.30 g of hydroquinone monomethyl ether, 381.2 g of a mixture composed of dipentaerythritol hexaacrylate and dipentaerythritol pentaacrylate (KAYARAD DPHA, manufactured by Nippon Kayaku Co., Ltd.), 21.2 g of 1,4-butanediol and 0.30 g of dibutyltin dilaurate are charged into the reactor. After conducting the reaction at 80°C for 5 hours, 939.02 g of methyl ethyl ketone is added thereto, and the mixture is cooled. As a result of infrared absorption spectrum analysis of the reaction product solution obtained, disappearance of absorption of an isocyanate group is confirmed. A product obtained by distilling methyl ethyl ketone away from the reaction product solution has a softening temperature of 42°C.

Synthesis of ionizing radiation or ultraviolet curable resin (C):
256.67 g of methyl ethyl ketone and 110 g of isophorone diisocyanate trimer are charged into a reactor equipped with a stirrer, a reflux condenser, a dropping funnel and a thermometer, and the temperature is raised to 80°C for dissolution. After air is introduced into the solution, 0.20 g of hydroquinone monomethyl ether, 146.65 g of a mixture composed of pentaerythritol tetraacrylate and pentaerythritol triacrylate, 30.08 g of epoxy acrylate (Epoxy Ester 70PA, manufactured by Kyoeisha Chemical Co., Ltd.) and 0.20 g of dibutyltin dilaurate are charged into the reactor. After conducting the reaction at 80°C for five hours, 412.37 g of methyl ethyl ketone is added, and the mixture is cooled. As a result of infrared absorption spectrum analysis of the reaction product solution obtained, disappearance of absorption of an isocyanate group is confirmed. A product obtained by distilling methyl ethyl ketone away from the reaction product solution has a softening temperature of 68°C.

Procurement of ionizing radiation or ultraviolet curable resin (D):
A mixture composed of dipentaerythritol hexaacrylate and dipentaerythritol pentaacrylate (KAYARAD DPHA, manufactured by Nippon Kayaku Co., Ltd.) is used as it is.

Synthesis of film forming resin (a):
A solution obtained by dissolving 30 g of isobornyl methacrylate, 65 g of methyl methacrylate and 5 g of glycidyl methacrylate in 200 g of toluene is heated in a reactor equipped with a stirrer, a reflux condenser, a dropping funnel and a thermometer. When the temperature has reached 65°C, 0.5 g of 2,2'-azobis(2,4-dimethylvaleronitrile) is added to the solution. Furthermore, two hours after the temperature reaching 65°C,
0.5 g of 2,2'-azobis(2,4-dimethylvaleronitrile) is again added to the solution. The reaction is conducted at 65°C for additional five hours to obtain a copolymer. Thereafter, while introducing air into the solution, the temperature of the solution is intermittently raised to 108°C. After 0.2 g of hydroquinone monomethyl ether and 0.2 g of triphenylphosphine are added thereto, 2.5 g of acrylic acid is added, and the reaction is conducted for five hours to obtain a film forming resin having an acryloyl group.

Synthesis of film forming resin (b):
5 g of 4-hydroxyethyl methacrylate, 20 g of isobornyl methacrylate, 75 g of methyl methacrylate, 200 g of methyl ethyl ketone and 0.5 g of 2,2'-azobis(2,4-dimethylvaleronitrile) are placed in a reactor equipped with a stirrer, a reflux condenser, a dropping funnel and a thermometer. In this state, polymerization is carried out at 65°C for 6 hours. Thereafter, air is introduced into the solution, and 0.2 g of hydroquinone monomethyl ether and 0.2 g of dibutyltin dilaurate are added thereto. After 10.7 g of isocyanate group-containing acrylate (VI-1 manufactured by Kagawa Chemical Ltd.) is added, the mixture is heated to 80°C and the reaction is conducted for five hours. Thus, a film forming resin having an acryloyl group is obtained.

Procurement of film forming resin (c):
A commercially available product of methacrylic acid ester resin (PARAPET GF, manufactured by Kuraray Co., Ltd.) is used as it is.

Formation of Sealing Layer:
An alkaline paper having a basis weight of 125 g/m² is prepared as a support sheet. An ink for sealing layer having the following composition is coated, by using a bar coater, on the support sheet so as to have a thickness of 5 g/m² after drying. Specifically, the ink for sealing layer contains 25 mass parts of styrene-acryl emulsion (X-436 manufactured by Seiko Polymer Corporation), 25 mass parts of water soluble acrylic resin (PDX-6102, manufactured by Johnson Polymer Corp.), 10 mass parts of silica (SYLYSIA 350 manufactured by Fuji Sylysia Chemical Ltd.), 25 mass parts of isopropyl alcohol, and 25 mass parts of water. After the coating, the ink is dried at 110°C for one minute to form a sealing layer on the support sheet.

Preparation of First Curable Resin Ink:
As shown in Table 1, 40 mass parts of the ionizing radiation or ultraviolet curable resin (B) and 60 mass parts (solid part mass) of the film forming resin (b) are mixed to prepare a first curable resin ink. A part of the first curable resin ink is sampled, and a softening temperature thereof is measured and found to be 80°C.

Preparation of Second to Sixth Curable Resin Inks:
In the same manner as the preparation of the first curable resin ink, the ionizing radiation or ultraviolet curable resins (A to D), the film forming resins (a to c) and silica (SYLYSIA 350 manufactured by Fuji Sylysia Chemical Ltd.) as inorganic pigments are mixed at a blending ratio (solid part mass) shown in Table 1 to prepare second to sixth curable resin inks.
A part of each of the second to sixth curable resin inks is sampled, and a softening temperature thereof is measured. The rightmost column in Table 1 shows the softening temperatures measured.

Preparation of Silicone Ink (α):
Toluene is added as a diluting solvent to 100 mass parts of a base compound of an addition polymerizable silicone material (KS-3603 manufactured by Shin-Etsu Chemical Co., Ltd.) composed of a mixture of alkenyl group-containing organopolysiloxane and organohydrogen polysiloxane and five mass parts of a curing agent (CAT-PL-50T manufactured by Shin-Etsu Chemical Co., Ltd.) composed of a platinum curing catalyst. In this event, toluene is added so as to set a solid concentration to 10 mass%. Thus, a silicone ink (α) is prepared.

Preparation of Silicone Ink (β):
Toluene is added as a diluting solvent to an acryloyl group-containing radical polymerizable silicone material (X-62-7901 manufactured by Shin-Etsu Chemical Co., Ltd.) so as to set a solid concentration to 10 mass%. Thus, a silicone ink (β) is prepared.

### (First Example)

Three mass parts of a photopolymerization initiator (Irgacure 907 manufactured by Ciba Specialty Chemicals Inc.) and methyl ethyl ketone as a diluting solvent are added to 100 mass parts (solid content) of the first curable resin ink so that a solid concentration is set to 30 weight%. Next, as shown in Table 2, the first curable resin ink is coated, by using a bar coater, on a support sheet having no sealing layer formed thereon so as to have a thickness of 10 g/m² after drying. Thereafter, the ink is heated at 110°C for one minute to evaporate the solvent and dried to form a plastic layer on the support sheet. Next, the silicone ink (α) is coated, by using a bar coater, on the plastic layer so as to have a thickness of 0.5 g/m² after drying. Thereafter, the ink is heated at 120°C for one minute to evaporate the solvent and dried to form a release layer containing addition-polymerized silicone on the plastic layer. Thus, an original sheet of an embossed release sheet according to a first example is obtained.

Thereafter, the original sheet of the embossed release sheet is embossed by using a metal embossing roll having a concave-convex pattern and a back-up roll that is a paper roll having a pattern of a female die. For a particular part (3 mm×3 mm) in the metal embossing roll, concaves and convexes are measured with a three-dimensional surface roughness tester (Surfcom 590A, manufactured by Tokyo Seimitsu Co., Ltd.). As a result, center plane average roughness (Ra) is 12.99 µm and ten-point mean roughness (Rz) is 65.78 µm. In this case, the temperature of the metal embossing roll is set to 120°C, and the support sheet, the plastic layer and the release layer are simultaneously embossed to obtain a good emboss not only on the plastic layer and the release layer but also on a backside of the support sheet. Thereafter, it is confirmed that the concave-convex pattern is satisfactorily provided also on the backside of the support sheet. Next, the original sheet of the embossed release sheet is irradiated with 600 mJ/cm² of ultraviolet rays by using a high-pressure mercury lamp with an output of 120 W/cm to cure an ionizing radiation curable resin contained in the plastic layer. As a result, an embossed layer is formed between the support sheet and the release layer. Thus, an embossed release sheet according to the first example is obtained. For the obtained embossed release sheet according to the first example, embossability, heat resistance and releasability are measured. Table 3 shows the results.

### (Second and Third Examples)

In the same manner as the first example, each curable resin ink shown in the column of "First layer" in Table 2 is coated on the support sheet and dried. After the drying, in the same manner as the first layer, each curable resin ink shown in the column of "Second layer" in Table 2 is coated and dried. Furthermore, in the same manner as the first example, a protective film is formed and an original sheet of an embossed release sheet is obtained. Thereafter, in the same manner as the first example, the original sheet of the embossed release sheet is embossed and irradiated with ultraviolet rays to obtain an embossed release sheet. For the obtained embossed release sheets according to second and third examples, embossability, heat resistance and releasability are measured. Table 3 shows the results.

### (First and Second Comparative Examples)

In the same manner as the first example, each curable resin ink shown in the column of "First layer" in Table 2 is coated on the support sheet and dried. After the drying, in the same manner as the first layer, each curable resin ink shown in the column of "Second layer" in Table 2 is coated and dried. Furthermore, in the same manner as the first example, a protective film is formed and an original sheet of an embossed release sheet is obtained. Thereafter, in the same manner as the first example, the original sheet of the embossed release sheet is embossed and irradiated with ultraviolet rays to obtain an embossed release sheet. For the obtained embossed release sheets according to first and second comparative examples, embossability, heat resistance and releasability are measured. Table 3 shows the results.

### (Third Comparative Example)

In the same manner as the first example, a curable resin ink shown in the column of "First layer" in Table 2 is coated on the support sheet and dried. After the drying, in the same manner as the first layer, a curable resin ink shown in the column of "Second layer" in Table 2 is coated and dried. Furthermore, the silicone ink (β) is coated, by using a bar coater, so as to have a thickness of 0.5 g/m² after drying. Thereafter, the ink is heated at 120°C for one minute to evaporate the solvent and dried to form a protective film. Subsequently, in the same manner as the first example, embossing and ultraviolet irradiation are performed to obtain an embossed release sheet. For the obtained embossed release sheet according to a third comparative example, embossability, heat resistance and releasability are evaluated. Table 3 shows the results.

### (Embossability)

Concaves and convexes in the embossed release sheet onto which the particular part of the metal embossing roll is transferred are measured with a three-dimensional surface roughness tester. The results are evaluated according to the following criteria.

Very Good: Both Ra and Rz values are not less than 85% relative to the values of the metal embossing roll.
Good: Both Ra and Rz values are not less than 70% relative to the values of the metal embossing roll, and any one of the Ra and Rz values is not less than 85%.
Normal: Both Ra and Rz values are not less than 70% and less than 85% relative to the values of the metal embossing roll.
Bad: Any one of Ra and Rz values is less than 70% relative to the value of the metal embossing roll.

### (Manufacturing Synthetic Leather Made of Polyvinyl Chloride)

A vinyl chloride sol having the following composition is coated by using a bar coater onto the surface of the embossed release sheet so as to have a thickness of 100 g/m², and the sol is heat-cured at 220°C for 3 minutes to form a synthetic leather, which is then released. Specifically, the vinyl chloride sol contains 100 mass parts of polyvinyl chloride (paste resin), 60 mass parts of dioctyl phthalate, three mass parts of an expanding agent (azodicarbonamide), 3 mass parts of antioxidant (KF-80A-8, manufactured by Kyodo Chemical Co., Ltd.) and 10 mass parts of calcium carbonate.

### (Heat Resistance)

The procedure of producing and releasing the synthetic leather made of polyvinyl chloride is repeated five times. Thereafter, the embossed release sheet is inspected for losing of the shape and deterioration in the support sheet. The results are evaluated according to the following criteria. Table 3 shows the results.

Good: No losing of shape is observed at the time of completion of the five-time repetitions.
Normal: Due to losing of shape or surface change, the embossed release sheet could no longer be used before the completion of the five-time repetitions.
Bad: The procedure is carried out only once due to losing of shape or breaking caused by deterioration in the support sheet.

### (Releasability in Repeated Use)

One-component polyurethane having the following composition is coated by using a bar coater onto the surface of the embossed release sheet so as to have a thickness of 20 g/m² after drying, and the polyurethane is heated at 120°C for two minutes and dried to form a surface film. Specifically, the one-component polyurethane contains 100 mass parts of ester polyurethane as a main agent (CRISVON, 7367SL, manufactured by Dainippon Ink and Chemicals, Inc.), 15 mass parts of color (DAILAC, TV-COLOR, manufactured by Dainippon Ink and Chemicals, Inc.), 30 mass parts of a solvent (methyl ethyl ketone) and 10 mass parts of a solvent (dimethylformamide).

Subsequently, a two-component urethane adhesive having the following composition is coated, by using a bar coater, on the surface film so as to have a thickness of 20 g/m² after drying. Thereafter, an inner sheet is attached thereto and the adhesive is heat-cured at 120°C for two minutes, followed by aging at 50°C for 24 hours to prepare a polyurethane synthetic leather. Specifically, the two-component urethane adhesive contains 100 mass parts of a two-component curing-type ester polyurethane resin as a main agent (CRISVON, 4070, manufactured by Dainippon Ink and Chemicals, Inc.), 50 mass parts of a curing agent for two-component curing-type urethane resin (CRISVON, NX, manufactured by Dainippon Ink and Chemicals, Inc.), three mass parts of an accelerating agent (CRISVON, ACCEL, HM manufactured by Dainippon Ink and Chemicals, Inc.), 80 mass parts of a solvent (toluene) and 40 mass parts of a solvent (ethyl acetate).

For the polyurethane synthetic leather thus obtained with a width of 15 mm is released by 180 degrees from the embossed release sheet by using a tensile tester (TENSILON RTC-1310A, manufactured by Orientec Co., Ltd.) at a rate of 300 mm/minute to measure peel strength. This procedure is repeated five times, and the releasability is evaluated according to the following criteria. Table 3 shows the results.

Very Good: Up to the completion of the five-time repetitions, the peel strength is less than 1.0N, and the releasability substantially remains unchanged.
Good: Up to the completion of the five-time repetitions, the releasing is possible but the peel strength is increased to 1.0N or more, that is, the releasability is somewhat deteriorated.
Normal: The releasability is considerably deteriorated, and the releasing becomes impossible before the fifth repetition of the procedure.
Bad: In the first procedure, the synthetic leather cannot be released.

**[Table 1]**

| | Ionizing radiation curable resin | | | | Film forming resin | | | Inorganic pigment | Softening temperature(□) |
|---|---|---|---|---|---|---|---|---|---|
| | A | B | C | D | a | b | c | | |
| First curable resin ink | | 40 | | | 60 | | | | 80 |
| Second curable resin ink | | | 85 | | | 15 | | | 75 |
| Third curable resin ink | 65 | | | | 35 | | | | 64 |
| Fourth curable resin ink | 55 | | | | | | 35 | 10 | 58 |
| Fifth curable resin ink | | | | 75 | | 25 | | | 35 |
| Sixth curable resin ink | | | | 25 | | | 75 | | 68 |

**[Table 2]**

| | Support sheet | Sealing layer | Embossed layer | | Protective layer |
|---|---|---|---|---|---|
| | | | First layer | Second layer | |
| First example | Alkaline paper | None | First curable | | Silicone ink □ |
| | | | resin ink | | |
| Second example | Alkaline paper | None | Fourth curable resin ink | First curable resin ink | Silicone ink □ |
| Third example | Alkaline paper | Present | Third curable resin ink | Second curable resin ink | Silicone ink □ |
| First comparative example | Alkaline paper | Present | Fifth curable resin ink | Fifth curable resin ink | Silicone ink □ |
| Second comparative example | Alkaline paper | Present | Sixth curable resin ink | Sixth curable resin ink | Silicone ink □ |
| Third comparative example | Alkaline paper | Present | Third curable resin ink | Second curable resin ink | Silicone ink □ |

**[Table 3]**

| | Embossability | Heat resistance | Releasability in Repeated Use |
|---|---|---|---|
| First example | Good | Good | Good |
| Second example | Very Good | Good | Good |
| Third example | Good | Good | Very Good |
| First comparative example | Bad | Good | Normal |
| Second comparative example | Normal | Bad | Good |
| Third comparative example | Bad | Good | Bad |

### Tables 1 to 3 show the following.

(1) For the embossed release sheets according to the first to third examples, the embossability, heat resistance and releasability in repeated use are all good.

(2) For the embossed release sheet according to the first comparative example, the embossability is poor due to the low softening temperature when methyl ethyl ketone is distilled away from the fifth curable resin ink.

(3) For the embossed release sheet according to the second comparative example, the heat resistance is poor because no isocyanate-type ionizing radiation or ultraviolet curable resin is used even though the softening temperature when methyl ethyl ketone is distilled away from the sixth curable resin ink is high. However, the embossed release sheet according to the second comparative example is useful for manufacturing the polyurethane synthetic leather.

(4) For the embossed release sheet according to the third comparative example, the embossability and releasability in repeated use are poor because no addition-polymerizable thermosetting silicone is used for the material of the protective film.

### (Fourth Example)

An alkaline paper having a basis weight of 130 g/m² is prepared as a support sheet. Next, a polypropylene resin is extrusion-coated on the support sheet to form an intermediate layer having a thickness of 30 µm. Thereafter, a surface of the intermediate layer is subjected to corona treatment at a power of 7 kW. Furthermore, the first curable resin ink is coated, by using a bar coater, on the surface of the intermediate layer so as to have a thickness of about 5 g/m² after drying. Thereafter, the ink is heated at 110°C for one minute to evaporate the solvent and dried to form a plastic layer on the intermediate layer. Next, the silicone ink (α) is coated, by using a bar coater, on the plastic layer so as to have a thickness of 0.5 g/m² after drying. Thereafter, the ink is heated at 120°C for one minute to evaporate the solvent and dried to form a release layer containing addition-polymerized silicone on the plastic layer. Thus, an original sheet of an embossed release sheet according to a fourth example is obtained.

Thereafter, the original sheet of the embossed release sheet is embossed by using a metal embossing roll having a concave-convex pattern and a back-up roll that is a paper roll having a pattern of a female die. For a particular part (3 mm×3 mm) in the metal embossing roll, concaves and convexes are measured with a three-dimensional surface roughness tester (Surfcom 590A, manufactured by Tokyo Seimitsu Co., Ltd.). As a result, center plane average roughness (Ra) is 12.99 µm and ten-point mean roughness (Rz) is 65.78 µm. In this case, the temperature of the metal embossing roll is set to 120°C, and the support sheet, the intermediate layer, the plastic layer and the release layer are simultaneously embossed to obtain a good emboss not only on the intermediate layer, the plastic layer and the release layer but also on a backside of the support sheet. Thereafter, it is confirmed that the concave-convex pattern is satisfactorily provided also on the backside of the support sheet. Next, the original sheet of the embossed release sheet is irradiated with 600 mJ/cm² of ultraviolet rays by using a high-pressure mercury lamp with an output of 120 W/cm to cure an ionizing radiation curable resin contained in the plastic layer. As a result, an embossed layer is formed between the support sheet and the release layer. Thus, an embossed release sheet according to the fourth example is obtained. For the obtained embossed release sheet according to the fourth example, embossability is measured. Table 4 shows the result. Note that the embossability is evaluated based on an embossing rate (%) of the embossed release sheet with respect to the particular part of the metal embossing roll having Ra of 12.99 µm and Rz of 65.78 µm.

### (Fourth Comparative Example)

On a support sheet, polypropylene is extrusion-coated so as to have a thickness of 30 µm. Thereafter, embossing is performed in the same manner as the fourth example to obtain an embossed release sheet according to a fourth comparative example. For the obtained embossed release sheet according to the fourth comparative example, embossability is measured. Table 4 shows the result.

### (Releasability in Repeated Use)

One-component polyurethane having the following composition is coated by using a bar coater onto the surface of the embossed release sheet so as to have a thickness of 20 µm, and the polyurethane is heated at 160°C for one minute and dried to form a surface film. Specifically, the one-component polyurethane contains 100 mass parts of ester polyurethane as a main agent (CRISVON, 7367SL, manufactured by Dainippon Ink and Chemicals, Inc.), 15 mass parts of color (DAILAC, TV-COLOR, manufactured by Dainippon Ink and Chemicals, Inc.), 30 mass parts of a solvent (methyl ethyl ketone) and 10 mass parts of a solvent (dimethyl formamide)

Next, a two-component curing-type polyester polyurethane adhesive having the following composition is coated, by using a bar coater, on the surface film so as to have a thickness of 40 µm after drying. Thereafter, an inner sheet is attached thereto and the adhesive is heat-cured at 130°C for five minutes, followed by aging at 40°C for 48 hours to prepare a polyurethane synthetic leather. Specifically, the two-component curing-type polyester polyurethane adhesive contains 100 mass parts of a two-component curing-type ester polyurethane resin as a main agent (CRISVON, 4070, manufactured by Dainippon Ink and Chemicals, Inc.), 13 mass parts of a curing agent for two-component curing-type urethane resin (CRISVON, NX, manufactured by Dainippon Ink and Chemicals, Inc.), three mass parts of an accelerator for two-component curing-type urethane resin as an accelerating agent (CRISVON, ACCEL, HM manufactured by Dainippon Ink and Chemicals, Inc.) and 30 mass parts of a solvent (methyl ethyl ketone).

For the polyurethane synthetic leather thus obtained with a width of 15 mm is released by 180 degrees from the embossed release sheet by using a tensile tester (TENSILON RTC-1310A, manufactured by Orientec Co., Ltd.) at a rate of 300 mm/minute to measure peel strength. Table 5 shows the results.

**[Table 4]**

| | Change in embossability due to repetitive use(%) | | | | | |
|---|---|---|---|---|---|---|
| | Before evaluation | First time | Second time | Third time | Fourth time | Fifth time |
| Fourth example | Ra : 87.3 | Ra : 87.0 | Ra : 87.2 | Ra : 87.2 | Ra : 87.6 | Ra : 87.0 |
| | Rz : 88.2 | Rz : 88.4 | Rz : 88.1 | Rz : 88.3 | Rz : 88.0 | Rz : 88.9 |
| Fourth comparative | Ra : 89.3 | Ra : 87.8 | Ra : 86.3 | Ra : 82.1 | Ra : 78.1 | Ra : 77.3 |
| example | Rz : 88.9 | Rz : 89.5 | Rz : 85.2 | Rz : 82.2 | Rz : 79.5 | Rz : 78.8 |

**[Table 5]**

| | Change in releasability due to repetitive use (gf/15 mm width) | | | | |
|---|---|---|---|---|---|
| | First time | Second time | Third time | Fourth time | Fifth time |
| Fourth example | 30 | 33 | 30 | 35 | 33 |
| Fourth comparative example | 25 | 28 | 32 | 29 | 30 |

Tables 4 and 5 show the following. For the embossed release sheet according to the fourth example, Ra and Rz substantially remain unchanged with time in the repeated use. On the other hand, for the embossed release sheet according to the fourth comparative example, the embossability is lowered relative to initial Ra and Rz in the repeated use. Therefore, it is found out that the embossed release sheet according to the fourth comparative example has poor heat resistance and mechanical strength.

Moreover, as shown in Table 5, the embossed release sheet according to the fourth example and the embossed release sheet according to the fourth comparative example have approximately the same releasability. Moreover, it is found out that the embossed release sheet according to the fourth example has approximately the same releasability as that of an embossed release sheet made of a thermoplastic resin such as a polypropylene resin.

### [Industrial Applicability]

The original sheet of an embossed release sheet, the embossed release sheet, the method for manufacturing an original sheet of an embossed release sheet, the method for manufacturing an embossed release sheet, the apparatus for manufacturing an embossed release sheet, the synthetic leather and the method for manufacturing a synthetic leather according to the present invention can be utilized in the apparel industry, furniture industry, household product industry, automobile industry and the like.

## Claims

1. An embossed release sheet comprising:
an embossed layer having concave portions and convex portions provided thereon,
wherein upper surfaces of the convex portions are rougher than bottom surfaces of the concave portions.

2. The embossed release sheet according to claim 1, wherein the bottom surfaces of the concave portions are flat.

3. An apparatus for manufacturing an embossed release sheet, comprising:
a roughening device roughening a surface of a plastic layer; and
a marking device providing concave portions, of which bottom surfaces are flatter than the surface, in the roughened plastic layer.

4. The apparatus for manufacturing an embossed release sheet according to claim 3, wherein the roughening device includes a first embossing roll for transferring a rough surface pattern onto the surface of the plastic film.

5. The apparatus for manufacturing an embossed release sheet according to claim 4,
wherein the marking device includes a second embossing roll for providing an emboss on the surface of the plastic film, the emboss having concaves and convexes larger than those in the rough surface pattern.

6. A method for manufacturing an embossed release sheet, comprising the steps of:
roughening a surface of a plastic layer; and
providing concave portions, of which bottom surfaces are flatter than the surface, in the roughened plastic layer.

7. The method for manufacturing an embossed release sheet according to claim 6,
wherein the roughening step includes a step of transferring a rough surface pattern onto the surface of the plastic film by using a first embossing roll.

8. The method for manufacturing an embossed release sheet according to claim 7, wherein the step of providing the flat concave portions includes a step of providing an emboss on the surface of the plastic film by using a second embossing roll, the emboss having concaves and convexes larger than those in the rough surface pattern.
